# EUROPEAN PATENT SPECIFICATION

(11) **EP 3 143 451 B1**
(45) Date of publication and mention of the grant of the patent: **28.04.2021**
(21) Application number: 15717260.2
(22) Date of filing: 30.03.2015
(51) Int. Cl.: G02B 21/14

(54) **PHASE-CONTRAST MICROSCOPE AND PHASE PLATE WITH ANNULAR PHASE-SHIFT REGION**
PHASENKONTRASTMIKROSKOP UND PHASENPLATTE MIT RINGFÖRMIGER PHASENSCHIEBERREGION
MICROSCOPE À CONTRASTE DE PHASE ET PLAQUE DE PHASE DOTÉE D'UNE RÉGION DE DÉPHASAGE ANNULAIRE

(30) Priority: 14.05.2014 JP 2014100717
(43) Date of publication of application: 22.03.2017
(73) Proprietor: Sony Corporation, Tokyo 108-0075 (JP)
(72) Inventor: DOWAKI, Suguru, Tokyo 108-0075 (JP); TATSUTA, Hirokazu, Tokyo 108-0075 (JP); MATSUI, Eriko, Tokyo 108-0075 (JP)
(74) Representative: D Young & Co LLP
(86) International application number: PCT/JP2015/001809
(87) International publication number: WO 2015/174007

(56) References cited:
- CN-A- 102 621 605
- US-A- 5 751 475
- US-A1- 2003 030 902
- US-B1- 6 317 261

## Description

### Technical Field

The present disclosure relates to a phase-contrast microscope and a phase-contrast microscopic system that are capable of capturing a phase-contrast image of an observed object.

### Background Art

### (CROSS REFERENCE TO RELATED APPLICATIONS)

This application claims the benefit of Japanese Priority Patent Application JP 2014-100717 filed May 14, 2014.

The phase-contrast microscope that is capable of generating a phase-contrast image of an observed object includes a condenser annulus and a phase plate, which are typical configurations of the phase-contrast microscope. The condenser annulus is a light-shielding plate on which a ring-shaped slit is formed, and the phase plate is a transparent plate including a ring-shaped phase shift film. Illumination light (uniform light) applied from a light source passes through the slit formed on the condenser annulus, is formed in a ring shape, and is collected on the observed object by a condenser lens (collective lens). It should be noted that the illumination light is split into two light beams, i.e., direct light that is transmitted through the observed object and diffraction light that is diffracted by the observed object.

When the direct light is transmitted through the phase shift film, the phase of the direct light is shifted and the intensity of the direct light is reduced. On the other hand, because most of the diffraction light is transmitted through a transparent portion of the phase plate (area other than the phase shift film), no change occurs in the phase and intensity of the diffraction light. The direct light and the diffraction light interfere with each other to generate a phase-contrast image. Thus, it is possible to observe the phase difference of the observed object as a contrast.

It should be noted that the optical resolution of a microscope is generally in inverse proportion to a wavelength, and in proportion to the numerical aperture (NA) of an objective lens. Therefore, the higher the NA is, the higher the optical resolution is. As described above, in the phase-contrast microscope, the direct light and the diffraction light are used to generate a phase-contrast image. Moreover, in the phase-contrast microscope, as much of the diffraction light is taken in as possible because the diffraction light is weaker than the direct light.

Specifically, the slit of the condenser annulus and the phase shift film of the phase plate on a pupil surface of the objective lens are typically configured to have a diameter of not more than half of the NA of the objective lens (see, for example, Patent Literature 1 and Patent Literature 2). This is because both of the diffraction light that is transmitted through the inside of the phase shift film (-1-order diffraction light) and the diffraction light that is transmitted through the outside of the phase shift film (+1-order diffraction light) are used to generate a phase-contrast image.

US 5 751 475 describes a phase contrast microscope including an illuminating optical system, a ring slit arranged at a pupil of the illuminating system, an imaging optical system, and a phase plate arranged at a pupil of the imaging system which is conjugate with the pupil of the illuminating optical system with respect to a specimen plane on which a specimen under inspection is placed. The phase plate is formed by a liquid crystal and a pair of transparent ring-shaped electrodes arranged on both sides of the liquid crystal. A voltage applied across the liquid crystal via the electrodes is changed such that a phase difference introduced by the phase plate is set to ±π/2 to obtain a dark contrast image and a bright contrast image. A difference between these dark and bright contrast images is derived to obtain a phase contrast image having high contrast and resolution.

US 2003/0030902 describes an illuminating light modulating decide that modulates at least one of wavelength, phase, intensity, polarization, and coherency of the light emitted to an object by an illuminating device. A pupil modulating device is disposed near a pupil plane of an objective lens, and modulates at least one of phase, intensity and direction of polarization of the luminous flux including the information of the object. An image pickup device is disposed on a plane on which the image of the object picked up by the objective lens and an imaging lens, and picks up the image of the object. An image analysis device analyzes the image of the object picked up by the image pickup device. A parameter decision device adjusts the modulation amounts of the illuminating light modulating device and the pupil modulating device by using the image information of the object analyzed by the image analysis device.

CN 106 621 605 describes a phase diaphragm for measuring material optical nonlinearity, which changes the circular phase object with the uniform phase retardance π/2 into the annular phase object with the phase retardance π/2. The numerical simulation proves that when the non-linear phase shift PhiNL is more than 0 and less than π and the widths of the phase objects are the same, the improved annular phase diaphragm has slightly higher measuring precision than that of the circular phase object in measuring the third-order nonlinearity and is the ideal measuring range of the optical nonlinearity. When the non-linear phase shift PhiNL is more than 0 and less than π, the annular phase diaphragm not only can measure and distinguish the size and the sign of the third-order nonlinearity refractivity, but also doesn't influence the sensitivity of the system measurement.

US 6 317 261 describes a phase contrast observation device for observing a phase object, and phase apertures for the same. The device comprises, in order along an optical axis, a light source capable of providing light, an illumination optical system for condensing the light and illuminating the object, an aperture stop having an aperture therein, arranged in the illumination optical system, an objective lens system for converging light from the illuminated object and forming an image of the object. The device also includes one of a number of novel phase apertures (Ph1-Ph4) arranged at a position inside said objective lens conjugate to the aperture stop. The phase apertures of the present invention allow for high-contrast and low-contrast imaging regardless of the phase content of the object.

### [Citation List]

### [Patent Literature]

[PTL 1] Japanese Patent Application Laid-open No. 2000-19410
[PTL 1] Japanese Patent Application Laid-open No. 1983-7123

### [Summary]

### [Technical Problem]

However, if the diameter of the phase shift film on the pupil surface of the objective lens is not more than half of the NA of the objective lens, such a problem that the direct light that has been transmitted through the observed object is used with only the NA not more than half of the NA of the objective lens to generate a phase-contrast image, and thus the optical resolution is reduced occurs.

In view of the circumstances as described above, it is desirable to provide a phase-contrast microscope and a phase-contrast microscopic system that are capable of achieving a high optical resolution.

### [Solution to Problem]

According to some embodiments, a phase-contrast microscope comprises a light source arranged to illuminate a sample region at a stage, an objective lens having a numerical aperture (NA) and arranged to collect radiation from the sample region, and a condenser annulus having an annular light-transmission region, wherein the condenser annulus is located between the light source and sample region. A phase-contrast microscope further comprises a phase plate having a first annular phase-shift region, wherein the annular phase-shift region receives radiation from the sample region at an angle from the sample region corresponding to greater than one-half of the NA of the objective lens.

Methods of operating a phase-contrast microscope are also considered. According to some implementations, a method for forming a phase-contrast image comprises acts of illuminating a sample region with a light source and a condenser annulus that is located between the light source and sample region, wherein the condenser annulus has an annular light-transmission region, collecting radiation from the sample region with an objective lens having a numerical aperture (NA), and phase shifting at least a portion of the collected radiation from the sample with a phase plate. In some aspects, the phase plate has an annular phase-shift region that receives radiation from the sample region at an angle from the sample region corresponding to greater than one-half of the NA of the objective lens.

### [Advantageous Effects of Invention]

As described above, according to the present disclosure, it is possible to provide a phase-contrast microscope capable of achieving a high optical resolution. It should be noted that the effects described above are not necessarily restrictive, and may be any of those described in the present disclosure.

### [Brief Description of Drawings]

[Fig. 1]
   Fig. 1 is a schematic diagram showing the configuration of a phase-contrast microscope.
[Fig. 2] Fig. 2 is a plan view of a condenser annulus of the phase-contrast microscope.
[Fig. 3] Fig. 3 is a plan view of a phase plate of the phase-contrast microscope.
[Fig. 4] Fig. 4 is a schematic diagram showing a pupil surface of an objective lens of the phase-contrast microscope.
[Fig. 5] Fig. 5 is a schematic diagram showing an image of a phase shift area on the pupil surface of the phase-contrast microscope.
[Fig. 6] Figs. 6 are each a schematic diagram showing an image of the phase shift area on the pupil surface of the phase-contrast microscope.
[Fig. 7] Fig. 7 is a schematic diagram showing an image of the phase shift area and an image of a light transmission area on the pupil surface of the phase-contrast microscope.
[Fig. 8] Fig. 8 is a schematic diagram showing direct light and diffraction light that enter the phase plate of the phase-contrast microscope.
[fig.9]Fig. 9 is a plan view of a phase plate of a phase-contrast microscope according to a comparative example.
[fig. 10] Fig. 10 is a schematic diagram showing an image of a phase shift area and an image of a light transmission area on a pupil surface of the phase-contrast microscope.
[fig.11]Fig. 11 is a schematic diagram showing direct light and diffraction light that enter the phase plate of the phase-contrast microscope.
[fig.12]Fig. 12 shows a bright field image obtained by capturing an image of an imaging sample with a low NA component of illumination light.
[fig.13]Fig. 13 shows a bright field image obtained by capturing an image of an imaging sample with a high NA component of illumination light.
[fig.14]Fig. 14 is a plan view showing a light-reducing plate of a phase-contrast microscope.
[fig.15]Fig. 15 is a schematic diagram showing the configuration of a phase-contrast microscopic system.
[fig.16]Fig. 16 is a schematic diagram showing the configuration of a phase-contrast microscope according to an embodiment of the present disclosure.
[fig.17]Fig. 17 is a plan view of a phase plate of the phase-contrast microscope.
[fig.18]Fig. 18 is a schematic diagram showing direct light and diffraction light that enter the phase plate of the phase-contrast microscope.
[fig.19]Fig. 19 is a schematic diagram obtained by splitting the diffraction light into a low-frequency component and a high-frequency component, out of the direct light and the diffraction light that enter the phase plate of the phase-contrast microscope.
[fig.20]Fig. 20 is a schematic diagram obtained by splitting the diffraction light into a low-frequency component and a high-frequency component, out of the direct light and the diffraction light that enter the phase plate of the phase-contrast microscope according to the first embodiment.
[fig.21]Fig. 21 is a schematic diagram showing the configuration of a phase-contrast microscopic system according to the first embodiment of the present disclosure.
[fig.22]Fig. 22 is a schematic diagram showing the configuration of a phase-contrast microscope according to a second embodiment of the present disclosure.
[fig.23]Fig. 23 is a plan view of a phase plate of the phase-contrast microscope.
[fig.24]Fig. 24 is a cross-sectional view of the phase plate of the phase-contrast microscope.
[fig.25]Fig. 25 is a cross-sectional view showing the relationship between applied voltage and the amount of phase shift in the phase plate of the phase-contrast microscope.
[fig.26]Fig. 26 is a cross-sectional view of the phase plate of the phase-contrast microscope.
[fig.27]Fig. 27 is a plan view of a light-reducing plate of the phase-contrast microscope.
[fig.28]Fig. 28 is a plan view showing a phase plate of a phase-contrast microscope.
[fig.29]Fig. 29 is a schematic diagram showing the configuration of a phase-contrast microscopic system according to the embodiment of the present disclosure.
[fig.30]Fig. 30 is a schematic diagram showing the configuration of a verification experiment system according to an example of the present disclosure.
[fig.31]Fig. 31 is a graph showing light transmission properties (light transmittance of 20%) of a light-reducing area in a light-reducing plate of the verification experiment system.
[fig.32]Fig. 32 is a graph showing light transmission properties (light transmittance of 10%) of a light-reducing area in a light-reducing plate of the verification experiment system.
[fig.33]Fig. 33 is a photograph of each phase plate used in the verification experiment system.
[fig.34]Fig. 34 is a photograph of each phase plate used in the verification experiment system.
[fig.35]Fig. 35 is a table showing the diameter of the phase shift area of each phase plate used in the verification experiment system.
[fig.36]Fig. 36 is a table showing the diameter of the light-reducing area of each light-reducing plate used in the verification experiment system.
[fig.37]Fig. 37 is a table showing the diameter of the phase shift area of each phase plate used in the verification experiment system and the diameter of the light transmission area of a condenser annulus.
[fig.38]Fig. 38 is a table showing optical parameters of the verification experiment system and the diameter of each area.
[fig.39]Fig. 39 is a table showing optical parameters of the verification experiment system and the diameter of each area.
[fig.40]Fig. 40 shows a phase-contrast image captured by the verification experiment system.
[fig.41]Fig. 41 shows a phase-contrast image captured by the verification experiment system.
[fig.42]Fig. 42 shows a phase-contrast image captured by the verification experiment system.
[fig.43]Fig. 43 shows a phase-contrast image captured by the verification experiment system.
[fig.44]Fig. 44 shows a phase-contrast image captured by the verification experiment system.
[fig.45]Fig. 45 shows a phase-contrast image captured by the verification experiment system.
[fig.46]Fig. 46 shows a phase-contrast image captured by the verification experiment system.
[fig.47]Fig. 47 is a graph showing results obtained by performing a frequency analysis on a phase-contrast image captured by the verification experiment system.

### Description of Embodiments

Hereinafter, embodiments of the present disclosure will be described with reference to the drawings.

A phase-contrast microscope will be described.

### (Configuration of phase-contrast microscope)

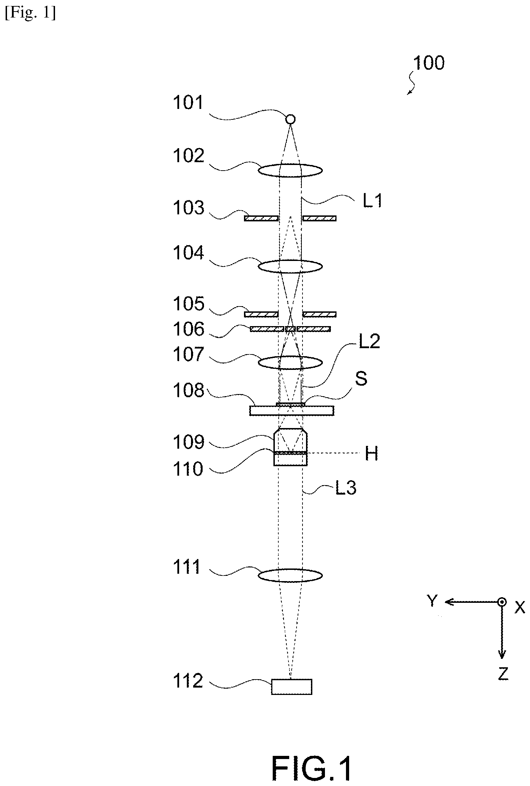

Fig. 1 is a schematic diagram showing the configuration of a phase-contrast microscope 100 according to this embodiment. As shown in Fig. 1, the phase-contrast microscope 100 includes a light source 101, a light source lens 102, a field stop 103, a relay lens 104, an aperture stop 105, a condenser annulus 106, a condenser lens 107, a stage 108, an objective lens 109, a phase plate 110, an imaging lens 111, and an imaging unit 112. Moreover, an observed object S is placed on the stage 108. Examples of the observed object S include a cell in a broth.

In the following description, the direction from the condenser annulus 106 to the phase plate 110 is assumed to be a Z direction, the direction perpendicular to the Z direction is assumed to be an X direction, and the direction perpendicular to the Z direction and the X direction is assumed to be a Y direction. The Z direction corresponds to the optical axis direction of the phase-contrast microscope 100, and the X direction and the Y direction represent directions along a stage surface of the stage 108.

The light source 101 is a light source for generating illumination light to be applied to an observed object, and a light source having an arbitrary configuration, such as a halogen lamp and a white light emitting diode (LED) can be used as the light source 101. In Fig. 1, the optical path of the illumination light applied from the light source 101 is referred to as an optical path L1.

The light source lens 102 is a lens for collecting the illumination light applied from the light source 101. As the light source lens 102, a light source having an arbitrary configuration can be used. However, a light source that is capable of making the illumination light be uniform light (Kohler illumination light) is favorable.

The field stop 103 is disposed at such a position that the field stop 103 is conjugated with the observed object S, and controls the range in which the illumination light is applied to the observed object S. Examples of the field stop 103 include a light-shielding plate on which a circular opening is formed.

The relay lens 104 is a lens for transmitting illumination light. As the relay lens 104, a lens having an arbitrary configuration can be used.

The aperture stop 105 is disposed at such a position that the aperture stop 105 is conjugated with the light source 101, and adjusts the amount of illumination light applied to the observed object S. Examples of the aperture stop 105 include a light-shielding plate on which a circular opening is formed.

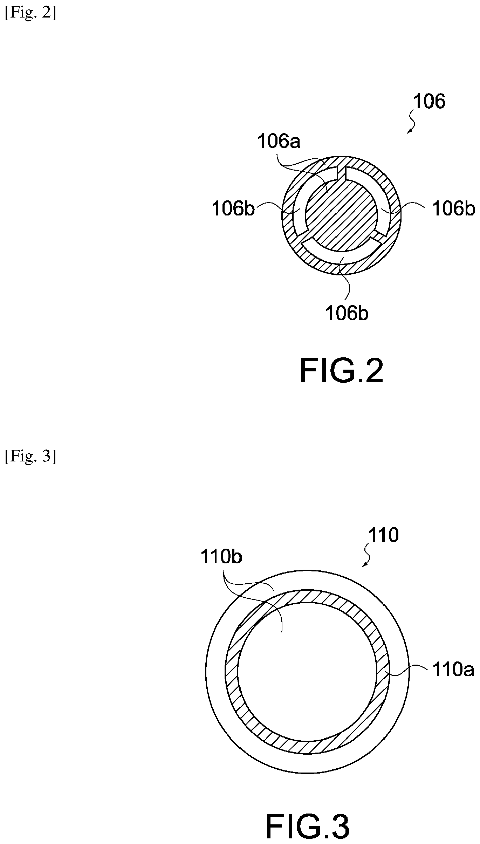

The condenser annulus 106 forms the illumination light in a ring shape. Fig. 2 is a plan view showing the condenser annulus 106 viewed from the Z direction. As shown in Fig. 2, the condenser annulus 106 has a light-shielding area 106a and light transmission areas 106b. The light-shielding area 106a is an area for blocking incident light, and the light transmission areas 106b are each an area for transmitting incident light therethrough. The condenser annulus 106 can include the light transmission areas 106b and the light-shielding area 106a. The light transmission areas 106b are each obtained by forming a slit on a light-shielding member, and the light-shielding area 106a is the remaining area.

The illumination light L1 that has entered the condenser annulus 106 is formed in a ring shape by being transmitted through the light-shielding area 106a. Fig. 1 shows the optical path of light that has passed through the condenser annulus 106 as an optical path L2.

It should be noted that the condenser annulus 106 is configured so that the condenser annulus 106 is conjugated with the phase plate 110, i.e., an image of the light transmission area 106b is included in an image of the phase shift area of the phase plate 110 on the pupil surface of the objective lens 109. The details thereof will be described later.

The condenser lens 107 is a lens for collecting illumination light on the observed object S. As the condenser lens 107, a lens having an arbitrary configuration can be used.

The stage 108 supports the observed object S. The stage 108 is configured to be capable of moving in the X direction, the Y direction, and the Z direction with a drive mechanism (not shown). It should be noted that at least the center portion of the stage 108 includes a material having an optical transparency.

The objective lens 109 enlarges an image of an observed object by a predetermined magnification. The objective lens 109 can be selected from lenses having various magnifications depending on the desired magnification. It should be noted that the objective lens 109 has a pupil surface (back focal surface). Fig. 1 shows the pupil surface of the objective lens 109 as a pupil surface H.

The phase plate 110 shifts the phase of a part of incident light. As shown in Fig. 1, the phase plate 110 is generally integrated with the objective lens 109. However, the phase plate 110 may be provided to the phase-contrast microscope 100 separately from the objective lens 109. As shown in Fig. 1, the phase plate 110 can be disposed on the pupil surface H of the objective lens 109. Alternatively, the phase plate 110 may be disposed not at the position of the pupil H but at a conjugated position in the phase-contrast microscope 100.

Fig. 3 is a plan view showing the phase plate 110 viewed from the Z direction. As shown in Fig. 3, the phase plate 110 has a phase shift area 110a and a light transmission area 110b. The phase shift area 110a is a bracelet-like area having a certain width in the phase plate 110, and shifts the phase of incident light. The shift amount of the phase is typically +1/4 wavelength or -1/4 wavelength. The phase shift area 110a can be an area for shifting the phase of the incident light and reducing the intensity of the incident light. However, as will be described later, the phase shift area 110a may be an area for only shifting the phase.

The light transmission area 110b is an area for transmitting incident light therethrough without shifting the phase of the incident light. The phase plate 110 can include the phase shift area 110a and the light transmission area 110b. The phase shift area 110a is obtained by forming a phase film in a bracelet-like shape on a light transmissive member, and the light transmission area 110b is the remaining area.

It should be noted that the phase plate 110 is configured so that an image of the phase shift area 110a on the pupil surface H of the objective lens 109 has a diameter larger than half of the NA of the objective lens 109. The details thereof will be described later.

The imaging lens 111 forms an image of the observed object S on the imaging surface of the imaging unit 112 (image sensor). As the imaging lens 111, an imaging lens having an arbitrary configuration can be used.

The imaging unit 112 captures a phase-contrast image of an observed object. Specifically, the imaging unit 112 may include an image sensor such as a charge coupled device (CCD) and a complementary metal oxide semiconductor (CMOS).

The objective lens 109, the phase plate 110, the imaging lens 111, and the imaging unit 112 constitute an imaging optical system. In Fig. 1, the optical path of the imaging optical system is referred to as an optical path L3. The observed object S and the imaging surface of the imaging unit 112 establish a conjugated relationship with each other, and the imaging unit 112 captures a phase-contrast image of the observed object S.

### (Regarding detailed configurations of condenser annulus and phase plate)

As described above, the phase plate 110 is configured so that an image of the phase shift area 110a on the pupil surface H of the objective lens 109 has a diameter larger than half of the NA of the objective lens 109.

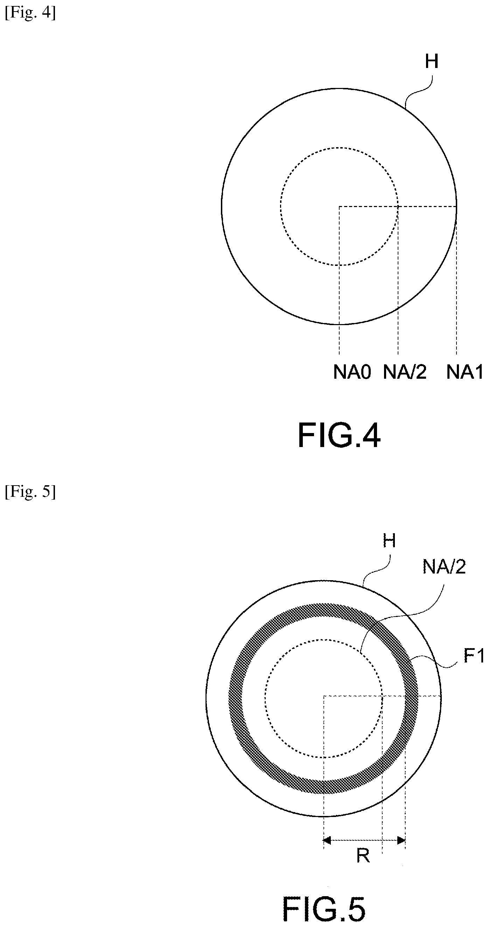

Fig. 4 is a schematic diagram showing the pupil surface H of the objective lens 109. As shown in Fig. 4, the center of the pupil surface H corresponds to NA0, and the peripheral edge of the pupil surface H corresponds to NA1. The half of the diameter of the pupil surface H, which is represented by a dashed circle, corresponds to NA/2.

Fig. 5 is a schematic diagram showing the pupil surface H and an image of the phase shift area 110a on the pupil surface H. In Fig. 5, an image of the phase shift area 110a is referred to as an image F1. It should be noted that as shown in Fig. 1, "the image of the phase shift area 110a" is the phase shift area 110a itself in the case where the phase plate 110 is located on the pupil surface H. On the other hand, "the image of the phase shift area 110a" is an image of the phase shift area 110a projected on the pupil surface H in the case where the phase plate 110 is not located on the pupil surface H.

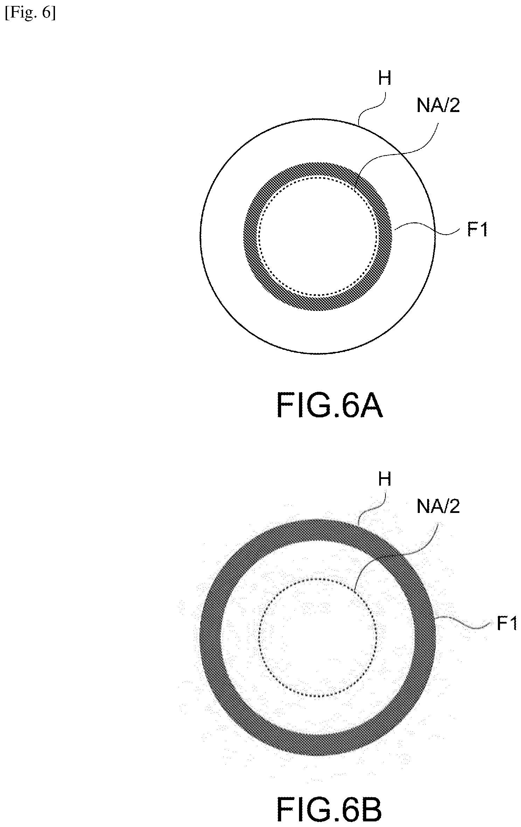

As shown in Fig. 5, the image F1 has a diameter larger than NA/2. It should be noted that the diameter of the image F1 is a diameter of the inner side of the bracelet-like circle. In Fig. 5, the diameter of the image F1 is referred to as a diameter R. Figs. 6 are each a schematic diagram showing another form of the image F1 of the phase shift area 110a on the pupil surface H. As shown in Fig. 6A, the image F1 may have a diameter slightly larger than NA/2. Alternatively, as shown in Fig. 6B, the image F1 may have such a diameter that the outer periphery of the image F1 is in contact with the peripheral edge of the pupil surface H.

The size (diameter) of the image F1 is determined depending on the range in which the phase shift area 110a is arranged in the phase plate 110 in the case where the phase plate 110 is located on the pupil surface H. On the other hand, the size of the image F1 is determined depending on the range in which the phase shift area 110a is arranged in the phase plate 110 and the positional relationship between the phase plate 110 and the pupil surface H in the case where the phase plate 110 is not located on the pupil surface H. Specifically, the phase plate 110 is configured so that the image F1 has a diameter larger than half of the NA of the objective lens 109 depending on the arrangement of the phase plate 110.

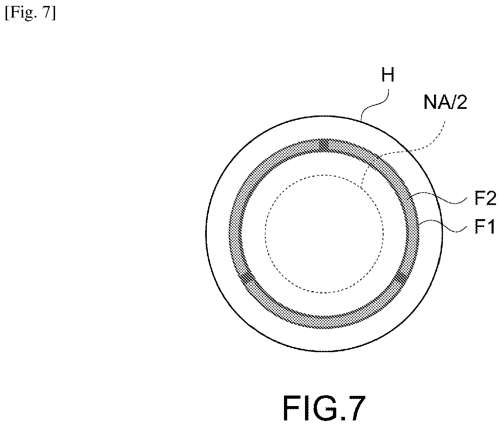

Moreover, as described above, the condenser annulus 106 is configured so that the condenser annulus 106 is conjugated with the phase plate 110, i.e., an image of the light transmission area 106b is included in an image of the phase shift area 110a of the phase plate 110 (image F1) on the pupil surface H. Fig. 7 is a schematic diagram showing the pupil surface H and images of the phase shift area 110a and the light transmission area 106b on the pupil surface H. In Fig. 7, the image of the light transmission area 106b is referred to as an image F2. As shown in Fig. 7, the image F2 is included in the image F1. Because the image F1 has a diameter larger than NA/2, also the image F2 included in the image F1 has a diameter larger than NA/2.

The size (diameter) of the image F2 is determined depending on the range in which the light transmission area 106b is arranged in the condenser annulus 106 and the positional relationship between the condenser annulus 106 and the pupil surface H. Specifically, the condenser annulus 106 is configured so that the image F2 is included in the image F1 depending on the arrangement of the condenser annulus 106. Also in the case where the image F1 is arranged as shown in Fig. 6A or Fig. 6B, the condenser annulus 106 is configured so that the image F2 is included in the image F1 as in Fig. 7.

### (Regarding capturing of phase-contrast image by phase-contrast microscope)

The phase-contrast microscope 100 has the above-mentioned configuration. The illumination light applied from the light source 101 (L1 in Fig. 1) is collected by the light source lens 102, and the range in which the illumination light is applied is controlled by the field stop 103. Then, the illumination light is transmitted by the relay lens 104, and the amount of light is adjusted by the aperture stop 105. Then, the illumination light is transmitted through the light transmission area 106b of the condenser annulus 106 (see Fig. 2), is formed in a ring shape (L2 in Fig. 1), and is applied to the observed object S by the condenser lens 107.

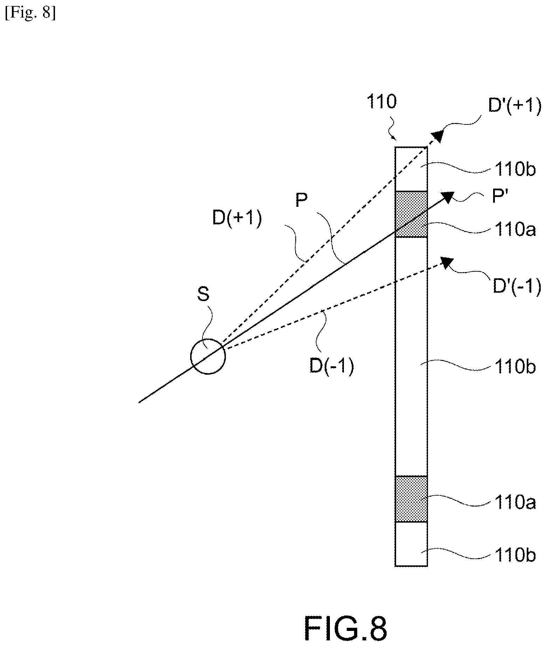

It should be noted that the illumination light is split into two light beams, i.e., direct light that is transmitted through an observed object and goes straight and diffraction light that is diffracted by the observed object S. Fig. 8 is a schematic diagram showing the direct light and the diffraction light that enter the phase plate 110. In Fig. 8, the direct light and the diffraction light are referred to as direct light P and diffraction light D, respectively. The diffraction light D includes -1-order diffraction light D(-1) that is diffracted inwardly than the direct light P, and +1-order diffraction light D(+1) that is diffracted outwardly than the direct light P. In addition, the diffraction light D may include higher-order diffraction light. The wavelength of the diffraction light D is delayed by about 1/4 wavelength with respect to the direct light P due to diffraction.

As shown in Fig. 8, when the direct light P is transmitted through the phase shift area 110a of the phase plate 110, the phase of the direct light P is shifted (by +1/4 wavelength or -1/4 wavelength), and the intensity of the direct light P is reduced. Hereinafter, the direct light that has been transmitted through the phase shift area 110a is referred to as direct light P'. Because most of the diffraction light D is transmitted through the light transmission area 110b of the phase plate 110, no change occurs in the phase and intensity of the diffraction light D. Hereinafter, the diffraction light that has been transmitted through the light transmission area 110b is referred to as diffraction light D' (+1-order diffraction light D'(+1) and -1-order diffraction light D'(-1)).

The phase of the direct light P' is shifted because the direct light P' has been transmitted through the phase shift area 110a. Therefore, the difference between the phases of the direct light P' and the diffraction light D' is 0 or 1/2 wavelength, and the direct light P' and the diffraction light D' interfere with each other. Moreover, the amount of the diffraction light D is significantly smaller than that of the direct light P. However, because the intensity of the direct light P is reduced by the phase shift area 110a, the amount of direct light P' is similar to that of diffraction light D'.

The direct light P' and the diffraction light D' are formed on the imaging surface of the imaging unit 112 by the imaging lens 111 (L3 in Fig. 1), and thus, a phase-contrast image is generated. As described above, in the phase-contrast microscope 100, the direct light P needs to enter the phase shift area 110a. Therefore, as shown in Fig. 8, the image of the light transmission area 106b (image F2) needs to be included in the image of the phase shift area 110a (image F1) on the pupil surface H.

### (Effects of phase-contrast microscope)

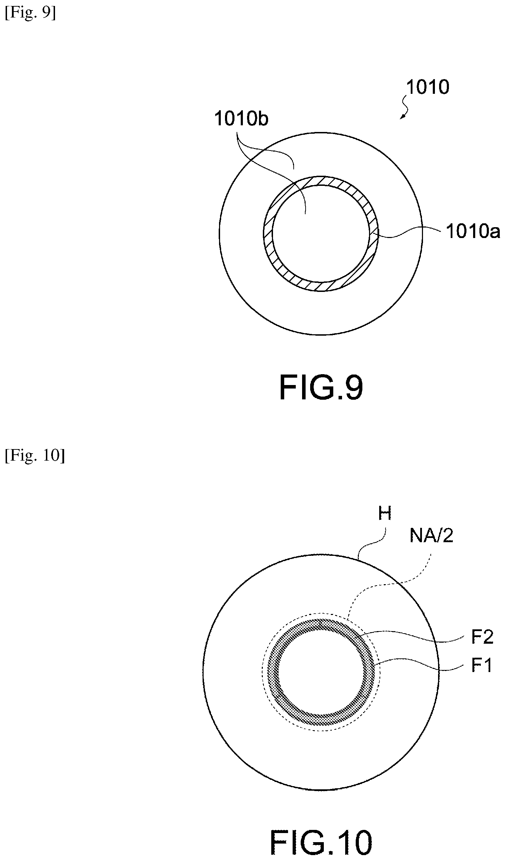

The effects of the phase-contrast microscope 100 will be described in comparison with a comparative example. Fig. 9 is a plan view of a phase plate 1010 in a phase-contrast microscope according to a comparative example. As shown in Fig. 9, the phase plate 1010 has a phase shift area 1010a and a light transmission area 1010b. Fig. 10 is a schematic diagram showing the pupil surface H of the phase-contrast microscope according to the comparative example.

As shown in Fig. 10, on the pupil surface H of the phase-contrast microscope according to the comparative example, the image F1 of the phase shift area of the phase plate has a diameter smaller than half of the NA of the objective lens. In addition, the image F2 of the light transmission area of the condenser annulus is included in the image F1. This is the same configuration as that of a general phase-contrast microscope.

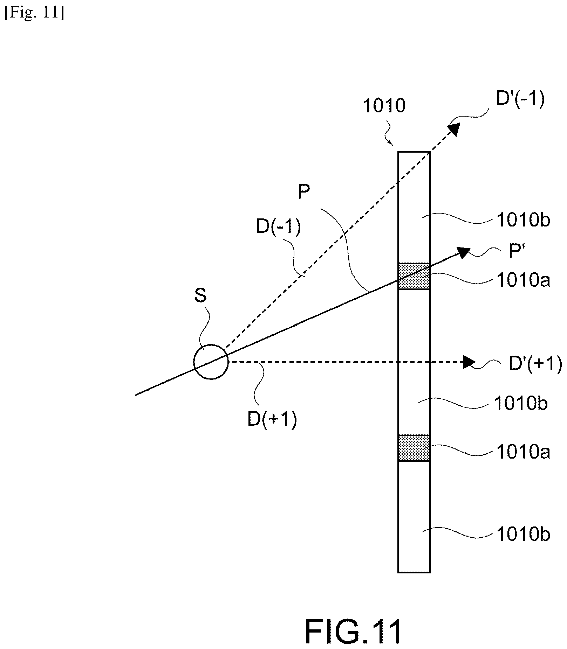

Fig. 11 is a schematic diagram showing the direct light and the diffraction light that enter the phase plate 1010 in the phase-contrast microscope according to the comparative example. As shown in Fig. 11, the illumination light that has entered the observed object S is split into two light beams, i.e., the direct light P and the diffraction light D(-1-order diffraction light D(-1) and +1-order diffraction light D(+1)). The direct light P that has been transmitted through the phase shift area 1010a is the direct light P', and the diffraction light that has been transmitted through the light transmission area 1010b is the diffraction light D' (-1-order diffraction light D'(-1) and + 1-order diffraction light D'(+1)).

It should be noted that as shown in Fig. 10, the phase-contrast microscope according to the comparative example is configured so that the image (F2) of the light transmission area of the condenser annulus on the pupil surface H has a diameter smaller than NA/2. Therefore, a bright field image constituting a phase-contrast image (direct light P') is equal to a bright field image obtained by cutting out low to medium NA components in the objective lens, and it may be impossible to make best use of the NA of the objective lens.

On the other hand, as shown in Fig. 7, the phase-contrast microscope 100 is configured so that the image (F2) of the light transmission area 106b on the pupil surface H has a diameter larger than NA/2. Accordingly, a bright field image constituting a phase-contrast image (direct light P') is equal to a bright field image obtained by cutting out medium to high NA components in the objective lens, and it is possible to make best use of the NA of the objective lens. Specifically, with this configuration, it is possible to achieve a higher optical resolution as compared with that according to the comparative example.

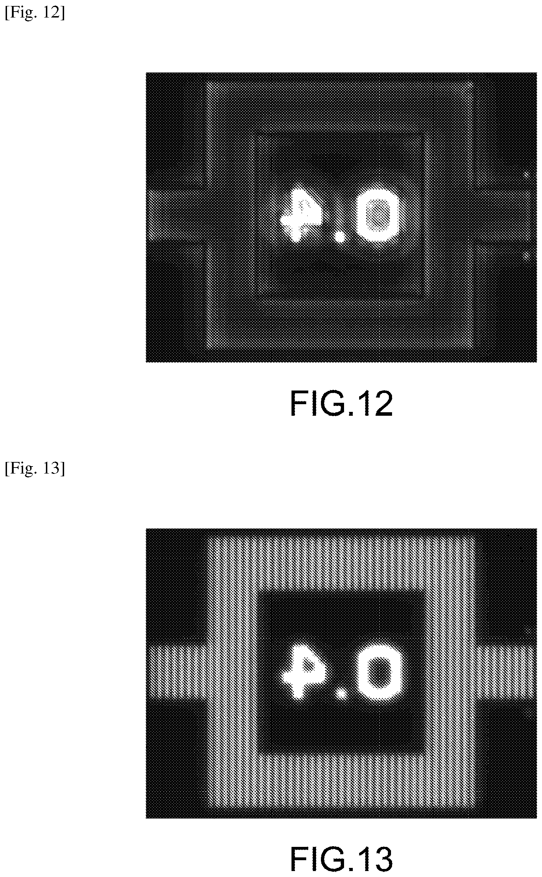

Fig. 12 and Fig. 13 are images showing the difference between the optical resolutions of the phase-contrast microscopes according to the comparative example and this embodiment, respectively. These images are each obtained by capturing an image of an imaging sample (chart with a line width of 0.4 µm and space) by the phase-contrast microscope. Fig. 12 is an image captured by a phase-contrast microscope that includes an objective lens with an NA of 0.3 and an optical magnification of 20 x, and is configured so that the image of the light transmission area of the condenser annulus is located on the pupil surface of the objective lens within the NA of 0.1 to 0.12. Fig. 13 is an image captured by a phase-contrast microscope that includes the same objective lens, and is configured so that the image of the light transmission area of the condenser annulus is located on the pupil surface of the objective lens within the NA of 0.24 to 0.28.

When these images are captured, a phase plate is not mounted on the phase-contrast microscope, i.e., these images are not phase-contrast images but bright field images. However, because the condenser annulus is mounted on the phase-contrast microscope as described above, the optical resolution of each image can be regarded to be equivalent to that of the phase-contrast image.

When Fig. 12 and Fig. 13 are compared to each other, a line with a line width of 0.4 µm is not resolved in Fig. 12, but a line with a line width of 0.4 µm is resolved in Fig. 13. Therefore, it can be seen that the phase-contrast microscope 100 has a high optical resolution.

Moreover, in view of the principle of a general space filter, the phase-contrast microscope 100 can provide effects of emphasizing a high-frequency range of a spatial frequency. Therefore, it is possible to substantially improve the optical resolution in the phase-contrast microscope, and to observe the high-frequency range of a spatial frequency with a high contrast.

### (Modified example)

In the above description, the phase shift area 110a of the phase plate 110 shifts the phase of incident light and reduces the intensity of the incident light. However, the phase shift area 110a may only shift the phase of the incident light. In this case, the phase-contrast microscope 100 may include a light-reducing plate for reducing the intensity of the incident light separately from the phase plate 110. The light-reducing plate may be disposed in adjacent to the phase plate 110, or may be disposed at a conjugated position in the phase-contrast microscope 100, which is apart from the phase plate 110.

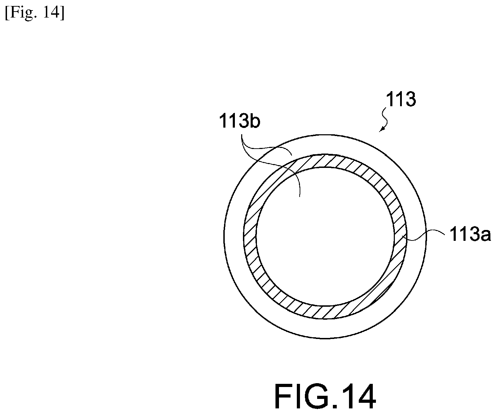

Fig. 14 is a plan view showing a light-reducing plate 113. As shown in Fig. 14, the light-reducing plate 113 has a light-reducing area 113a and a light transmission area 113b. The light-reducing area 113a is an area for reducing the intensity of incident light, and is formed in a bracelet-like shape. The light transmission area 113b is an area for transmitting incident light therethrough without reducing the intensity of the incident light. The light-reducing plate 113 can include the light-reducing area 113a and the light transmission area 113b. The light-reducing area 113a is obtained by forming a light-reducing film in a bracelet-like shape on a light transmissive member, and the light transmission area 113b is the remaining area.

The light-reducing area 113a reduces the intensity of the direct light P' that has been transmitted through the phase shift area 110a (see Fig. 8) as in the configuration of the phase shift area 110a of the phase plate 110 having the function of reducing the intensity of light. Therefore, the light-reducing plate 113 is configured so that the image F1 of the phase shift area 110a (see Fig. 7) corresponds to the image of the light-reducing area 113a on the pupil surface H of the objective lens 109. Because the image F1 has a diameter larger than NA/2 on the pupil surface H, also the image of the light-reducing area 113a, which corresponds to the image F1, has a diameter larger than NA/ 2.

Also the phase-contrast microscope having such a configuration can have a high optical resolution as in the configuration of the phase shift area 110a of the phase plate 110 having the function of reducing the intensity of light.

### (Regarding phase-contrast microscopic system)

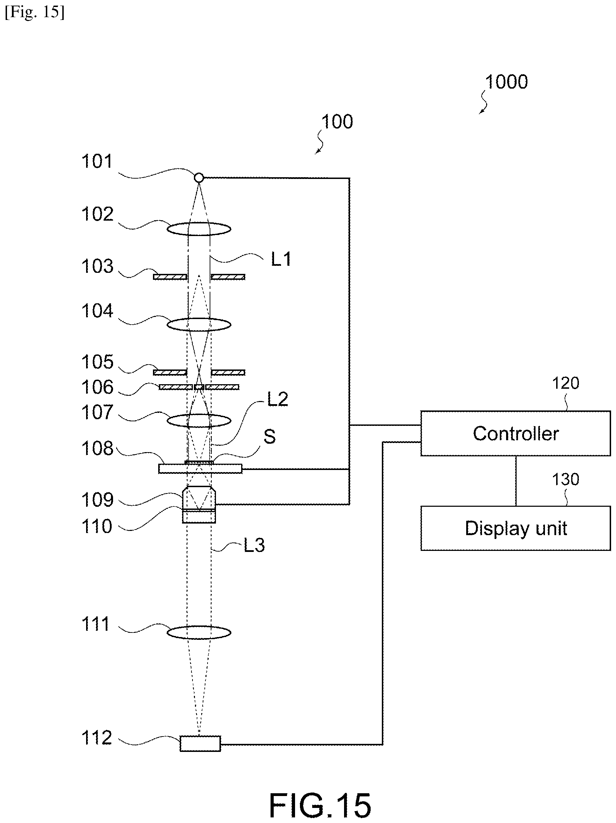

The phase-contrast microscope 100 may constitute a microscopic system. Fig. 15 is a schematic diagram showing the configuration of a phase-contrast microscopic system 1000 including the phase-contrast microscope 100.

As shown in Fig. 15, the phase-contrast microscopic system 1000 includes the phase-contrast microscope 100, a controller 120, and a display unit 130.

The phase-contrast microscope 100 has the above-mentioned configuration. As described above, the phase-contrast microscope 100 includes the imaging unit 112 that captures a phase-contrast image of an observed object.

The controller 120 controls the phase-contrast microscope 100 and the imaging unit 112, and causes the imaging unit 112 to capture a phase-contrast image. Specifically, the controller 120 can be connected to the light source 101, the stage 108, and the objective lens 109, and can control these components.

For example, the controller 120 can adjust the contrast of a phase-contrast image captured by the imaging unit 112 to maximize the contrast, when the observed object S is placed on the stage 108. In addition, the controller 120 can control each configuration of the phase-contrast microscope 100, and cause the imaging unit 112 to capture a phase-contrast image. The controller 120 supplies the phase-contrast image captured by the imaging unit 112 to the display unit 130.

The display unit 130 displays the phase-contrast image supplied from the controller 120. The display unit 130 can be an image display apparatus such as a liquid crystal display (LDC).

The phase-contrast microscopic system 1000 has the above-mentioned configuration. Because the phase-contrast microscopic system 1000 includes the phase-contrast microscope 100, it is possible to make best use of the NA of the objective lens as described above, and to achieve a high optical resolution.

### (First embodiment)

A phase-contrast microscope according to a first embodiment of the present disclosure will be described.

### (Configuration of phase-contrast microscope)

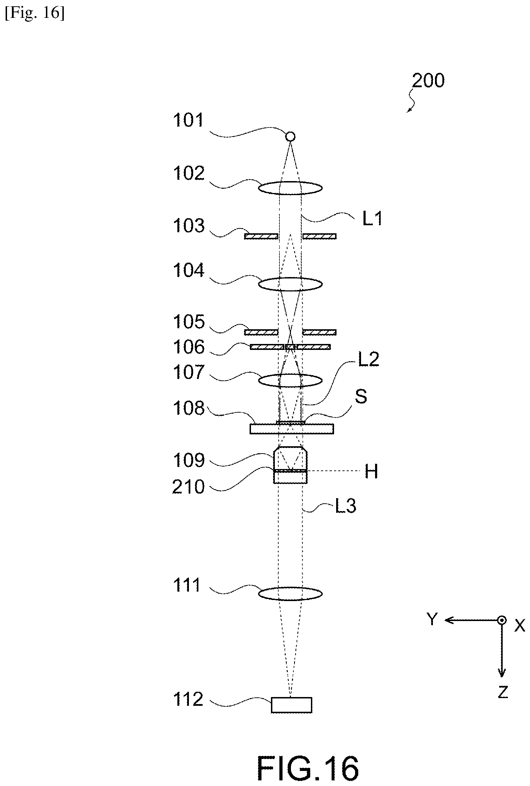

Fig. 16 is a schematic diagram showing the configuration of a phase-contrast microscope 200 according to this embodiment. The phase-contrast microscope 200 has the same configuration as that of the phase-contrast microscope 100 except the configuration of the phase plate. In the phase-contrast microscope 200, the same configurations as those of the phase-contrast microscope 100 will be denoted by the same reference symbols and a description thereof will be omitted.

As shown in Fig. 16, the phase-contrast microscope 200 includes a phase plate 210. As shown in Fig. 16, the phase plate 210 is typically integrated with the objective lens 109. However, the phase plate 210 may be provided to the phase-contrast microscope 200 separately from the objective lens 109. As shown in Fig. 16, the phase plate 210 may be disposed on the pupil surface H of the objective lens 109. In addition, the phase plate 210 may be disposed at a conjugated position in the phase-contrast microscope 200, which is different from the pupil surface H.

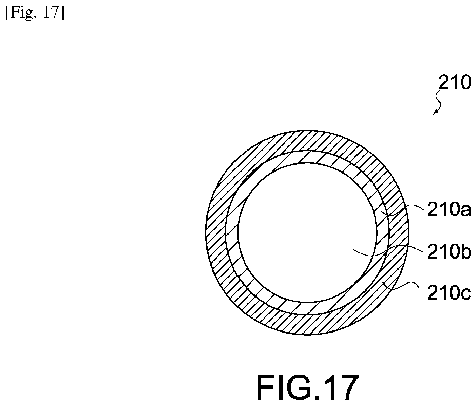

Fig. 17 is a plan view showing the phase plate 210 viewed from the Z direction. As shown in Fig. 17, the phase plate 210 has a phase shift area 210a, a light transmission area 210b, and a light-shielding area 210c.

The phase shift area 210a is a bracelet-like area having a certain width in the phase plate 210, and shifts the phase of incident light. The amount of phase shift is typically + 1/4 wavelength or -1/4 wavelength. The phase shift area 210a can shift the phase of the incident light and reduce the intensity of the incident light. However, as will be described later, the phase shift area 210a may only shift the phase. It should be noted that the phase shift area 210a is favorably an area having a larger amount of light reduction as compared with the phase shift area of a general phase plate or the phase plate 110.

The light transmission area 210b is an area for transmitting incident light therethrough without shifting the phase of the incident light. As shown in Fig. 17, the light transmission area 210b is provided in the inner peripheral area of the phase shift area 210a. The light-shielding area 210c is an area for blocking the incident light. As shown in Fig. 17, the light-shielding area 210c is provided in the outer peripheral area of the phase shift area 210a.

The phase plate 210 can include the phase shift area 210a, the light-shielding area 210c, and the light transmission area 210b. The phase shift area 210a is obtained by forming a phase film in a bracelet-like shape on a light transmissive member, the light-shielding area 210c is obtained by forming a light-shielding film on the outer peripheral area of the phase shift area 210a, and the light transmission area 210b is the remaining area.

It should be noted that the phase plate 210 is configured so that the image of the phase shift area 210a has a diameter larger than half of the NA of the objective lens 109 on the pupil surface H of the objective lens 109. Specifically, the phase plate 210 is configured so that the image of the phase shift area 210a on the pupil surface H is the same as the image F1 shown in Fig. 5.

The condenser annulus 106 is configured so that the condenser annulus 106 is conjugated with the phase plate 210, i.e., the image of the light transmission area 106b (image F2) is included in the image of the phase shift area 210a (image F1) on the pupil surface H as in the first embodiment (see Fig. 7). Because the image F1 has a diameter larger than NA/2, also the image F2 included in the image F1 has a diameter larger than NA/2.

(Regarding capturing of phase-contrast image by phase-contrast microscope) The phase-contrast microscope 200 has the above-mentioned configuration. The illumination light applied from the light source 101 (L1 in Fig. 16) is collected by the light source lens 102, and the range in which the illumination light is applied is controlled by the field stop 103. Then, the illumination light is transmitted by the relay lens 104, and the amount of the illumination light is adjusted by the aperture stop 105. Then, the illumination light is transmitted through the light transmission area 106b of the condenser annulus 106, is formed in a ring shape (L2 in Fig. 16), and is applied to the observed object S by the condenser lens 107.

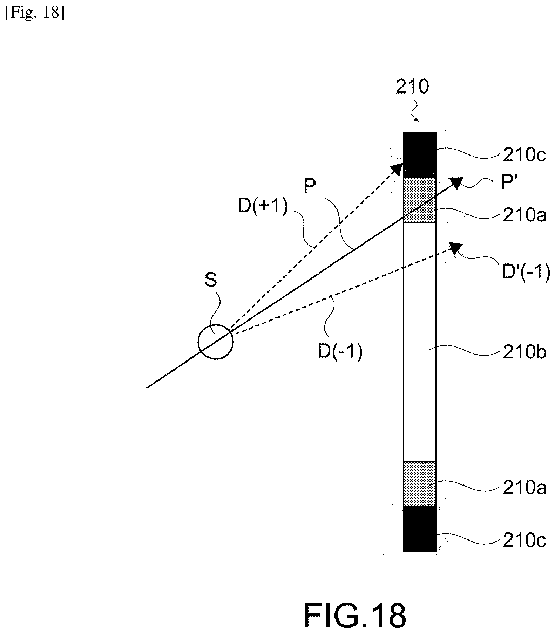

It should be noted that the illumination light is transmitted through an observed object and then is split into two light beams, i.e., direct light that goes straight and diffraction light that is diffracted by the observed object S. Fig. 18 is a schematic diagram showing the direct light and the diffraction light that enter the phase plate 210. In Fig. 18, the direct light and the diffraction light are referred to as direct light P and diffraction light D, respectively. The diffraction light D includes -1-order diffraction light D(-1) that is diffracted inwardly than the direct light P, and +1-order diffraction light D(+1) that is diffracted outwardly than the direct light P. Moreover, the diffraction light D may include higher-order diffraction light.

The diffraction angle of the diffraction light D (angle between the direct light P and the diffraction light D) varies depending on the size of a phase object (observed object S), and is larger as the phase object is decreased in size. Therefore, the diffraction light D having a larger diffraction angle is a high-frequency component of a spatial frequency. The wavelength of the diffraction light D is delayed with respect to the direct light P by about 1/4 wavelength due to diffraction.

As shown in Fig. 18, when the direct light P is transmitted through the phase shift area 210a of the phase plate 210, the phase of the direct light P is shifted (by +1/4 wavelength or -1/4 wavelength), and the intensity of the direct light P is reduced. The - 1-order diffraction light D(-1) is transmitted through the light transmission area 210b, and no change occurs in the phase and intensity of the -1-order diffraction light D(-1). The +1-order diffraction light D(+1) is blocked by the light-shielding area 210c.

The direct light P' that has been transmitted through the phase shift area 210a and the -1-order diffraction light D'(-1) that has been transmitted through the light transmission area 210b interfere with each other, and are formed on the imaging surface of the imaging unit 112 by the imaging lens 111 (L3 in Fig. 16). Thus, a phase-contrast image is generated. As described above, the +1-order diffraction light D(+1) is blocked by the light-shielding area 210c. Therefore, the +1-order diffraction light D(+1) is not taken into the phase-contrast image.

### (Effects of phase-contrast microscope)

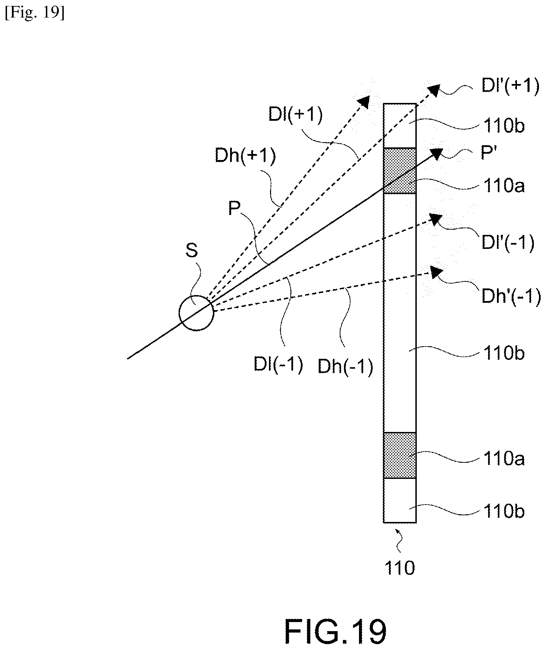

The effects of the phase-contrast microscope 200 will be described. Fig. 19 is a diagram obtained by splitting the diffraction light into a low-frequency component and a high-frequency component, out of the direct light and the diffraction light that enter the phase plate 110. As described above, the illumination light that has entered the observed object S is split into the direct light P and the diffraction light D.

It should be noted that the diffraction angle of the diffraction light D (angle between the direct light P and the diffraction light D) varies depending on the size of a phase object (observed object S), and is larger as the phase object is decreased in size. Therefore, the diffraction light D includes a plurality of frequency components having different diffraction angles. A component having a small diffraction angle is derived from a large phase object, and is a low-frequency component of a spatial frequency in the diffraction light D. A component having a large diffraction angle is derived from a small phase object, and is a high-frequency component of a spatial frequency in the diffraction light D.

In Fig. 19, the low-frequency component of the diffraction light D is referred to as a low-frequency component Dl (-1-order low-frequency component Dl(-1) and +1-order low-frequency component Dl(+1)), and the high-frequency component of the diffraction light D is referred to as a high-frequency component Dh(-1-order high-frequency component Dh(-1) and +1-order high-frequency component Dh(+1)). With the configuration of the phase plate 110 shown in Fig. 19, of the +1-order diffraction light D(+1), the low-frequency component Dl(+1) enters the light transmission area 110b but the high-frequency component Dh(+1) does not enter the phase plate 110 depending on the position of the phase shift area 110a. On the other hand, of the - 1-order diffraction light D(-1), the low-frequency component Dl(-1) and the high-frequency component Dh(-1) enter the light transmission area 110b.

In this case, of the low-frequency components of the diffraction light D, the -1-order low-frequency component Dl(-1) and the + 1-order low-frequency component D1(+1) are taken into the phase-contrast image. On the other hand, of the high-frequency components of the diffraction light D, only the -1-order high-frequency component Dh(-1) is taken in the phase-contrast image, and the + 1-order high-frequency component Dh(+1) is not taken into the phase-contrast image. Accordingly, the amount of the low-frequency component is not continuous with the amount of the high-frequency component, and the high-frequency part is darker than the low-frequency part in a phase-contrast image.

On the other hand, in the configuration according to the comparative example (see Fig. 11), no difference occurs between the amount of incident light of a high-frequency component of the + 1-order diffraction light D(+1) and the amount of incident light of a high-frequency component of the -1-order diffraction light D(-1) because the diffraction light inside the phase shift area 1010a and the diffraction light outside the phase shift area 1010a are transmitted through the light transmission area 1010b nearly equally. Specifically, with the configuration according to the first embodiment, it is possible to improve the optical resolution and to take a higher-frequency component into a phase-contrast image as compared with the configuration according to the comparative example. However, the light amount of the high-frequency component is reduced as compared with that of the low-frequency component.

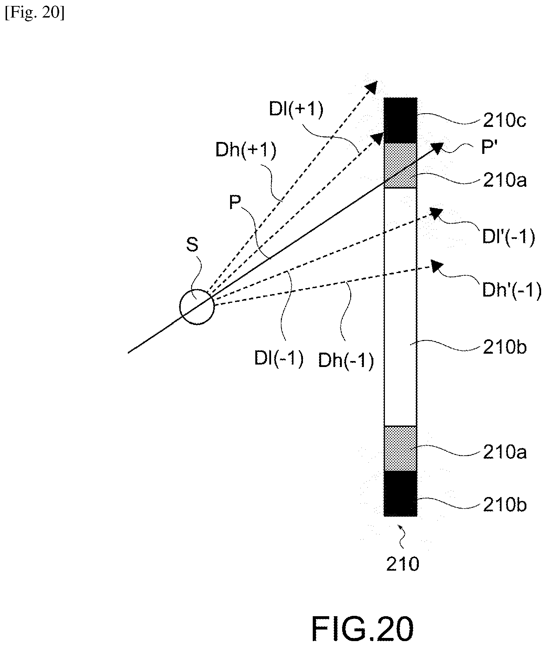

Fig. 20 is a schematic diagram obtained by splitting the diffraction light into a low-frequency component and a high-frequency component, out of the direct light P and the diffraction light D that enter the phase plate 210 according to this embodiment. As described above, in the phase plate 210, the light-shielding area 210c is provided to the outer peripheral area of the phase shift area 210a. Therefore, as shown in Fig. 20, of the +1-order diffraction light, the low-frequency component Dl(+1) and the high-frequency component Dh(+1) are blocked by the light-shielding area 210c.

On the other hand, of the -1-order diffraction light, the low-frequency component Dl(-1) and the high-frequency component Dh(-1) are transmitted through the light transmission area 210b. Therefore, no difference occurs between the amount of incident light of the high-frequency component of the +1-order diffraction light D(+1) and the amount of incident light of the high-frequency component of the -1-order diffraction light D(-1). Specifically, with the configuration according to this embodiment, as compared with the configuration according to the comparative example, it is possible not only to improve the optical resolution and to take a higher-frequency component into a phase-contrast image but also to prevent the light amount of the high-frequency component from being reduced as compared with the low-frequency component.

It should be noted that in the phase plate 210, the +1-order diffraction light D(+1)is blocked, and only the -1-order diffraction lightD(-1) is used to generate a phase-contrast image, as described above. Therefore, in order to achieve a favorable phase-contrast image, there is a need to reduce the intensity of the direct light P' with respect to the -1-order diffraction light D(-1). Therefore, the phase shift area 210a of the phase plate 210 is favorably an area having a larger amount of light reduction as compared with the phase shift area of a general phase plate or the phase plate 110.

### (Modified example)

Also in this embodiment, the phase-contrast microscope 200 may include a light-reducing plate separately from the phase plate 210. The light-reducing plate has a light-reducing area and a light transmission area, and is configured so that the image of the light-reducing area on the pupil surface of the objective lens has a diameter larger than half of the NA of the objective lens.

In addition, although the phase plate 210 includes the light-shielding area 210c, a light-shielding plate having a bracelet-like light-shielding area may be provided separately from the phase plate 210. In this case, the phase plate 210 may have the same configuration as that of the phase plate 110 according to the first embodiment. The light-shielding plate only needs to have a configuration in which the +1-order diffraction light D(+1) (see Fig. 20) can be blocked.

### (Regarding phase-contrast microscopic system)

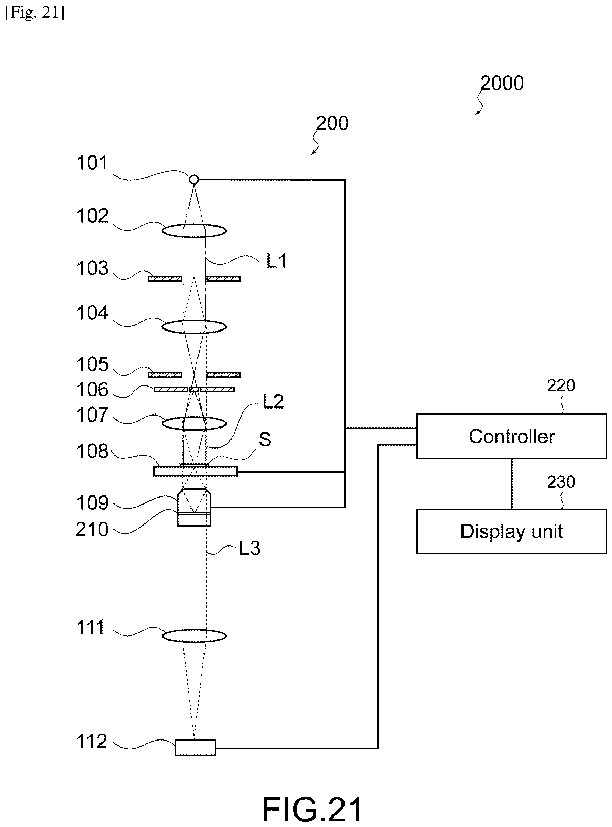

The phase-contrast microscope 200 may have a microscopic system. Fig. 21 is a schematic diagram showing the configuration of a phase-contrast microscopic system 2000 including the phase-contrast microscope 200.

As shown in Fig. 21, the phase-contrast microscopic system 2000 includes the phase-contrast microscope 200, a controller 220, and a display unit 230.

The phase-contrast microscope 200 has the above-mentioned configuration. As described above, the phase-contrast microscope 200 includes the imaging unit 112 that captures a phase-contrast image of an observed object.

The controller 220 controls the phase-contrast microscope 200 and the imaging unit 112, and causes the imaging unit 112 to capture a phase-contrast image. Specifically, the controller 220 can be connected to the light source 101, the stage 108, and the objective lens 109, and can control these components.

For example, the controller 220 can adjust the contrast of a phase-contrast image captured by the imaging unit 112 to maximize the contrast, when the observed object S is placed on the stage 108. In addition, the controller 220 can control each configuration of the phase-contrast microscope 200, and cause the imaging unit 112 to capture a phase-contrast image. The controller 220 supplies the phase-contrast image captured by the imaging unit 112 to the display unit 230.

The display unit 230 displays the phase-contrast image supplied from the controller 220. The display unit 230 can be an image display apparatus such as a liquid crystal display (LCD).

The phase-contrast microscopic system 2000 has the above-mentioned configuration. Because the phase-contrast microscopic system 2000 includes the phase-contrast microscope 200, it is possible to make best use of the NA of the objective lens as described above, and to achieve a high optical resolution.

### (Second embodiment)

A phase-contrast microscope according to a second embodiment of the present disclosure will be described.

### (Configuration of phase-contrast microscope)

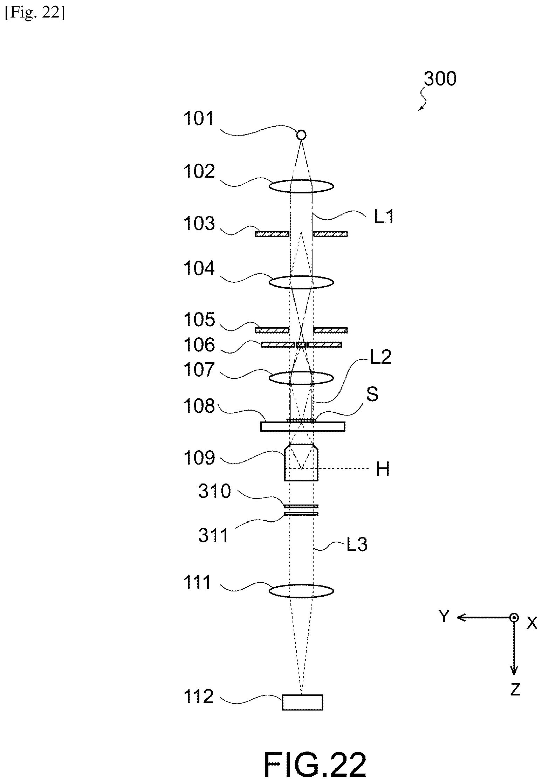

Fig. 22 is a schematic diagram showing the configuration of a phase-contrast microscope 300. The phase-contrast microscope 300 has the same configuration as that of the phase-contrast microscope 100 except the configuration of the phase plate. In the phase-contrast microscope 300, the same configurations as those of the phase-contrast microscope 100 will be denoted by the same reference symbols and a description thereof will be omitted.

As shown in Fig. 22, the phase-contrast microscope 300 includes a phase plate 310 and a light-reducing plate 311. The phase plate 310 may be provided separately from the objective lens 109 as shown in Fig. 22. Alternatively, the phase plate 310 may be provided integrally with the objective lens 109.

The phase plate 310 may be disposed at a position where the phase plate 310 is conjugated with a relay lens (not shown) in the phase-contrast microscope 300, which is different from the pupil surface H of the objective lens 109 as shown in Fig. 22, or may be disposed on the pupil surface H. The light-reducing plate 311 may be provided in adjacent to the phase plate 310, or may be provided apart from the phase plate 310.

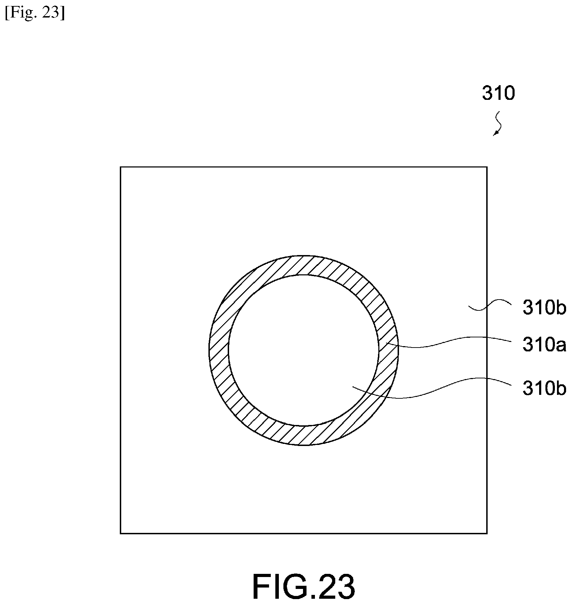

Fig. 23 is a plan view showing the phase plate 310 viewed from the Z direction. As shown in Fig. 23, the phase plate 310 has a phase shift area 310a and a light transmission area 310b. The phase shift area 310a is a bracelet-like area having a certain width in the phase plate 210, and shifts the phase of incident light.

The light transmission area 310b is an area for transmitting incident light therethrough without shifting the phase of the incident light. The light transmission area 310b can be an area other than the phase shift area 310a in the phase plate 310.

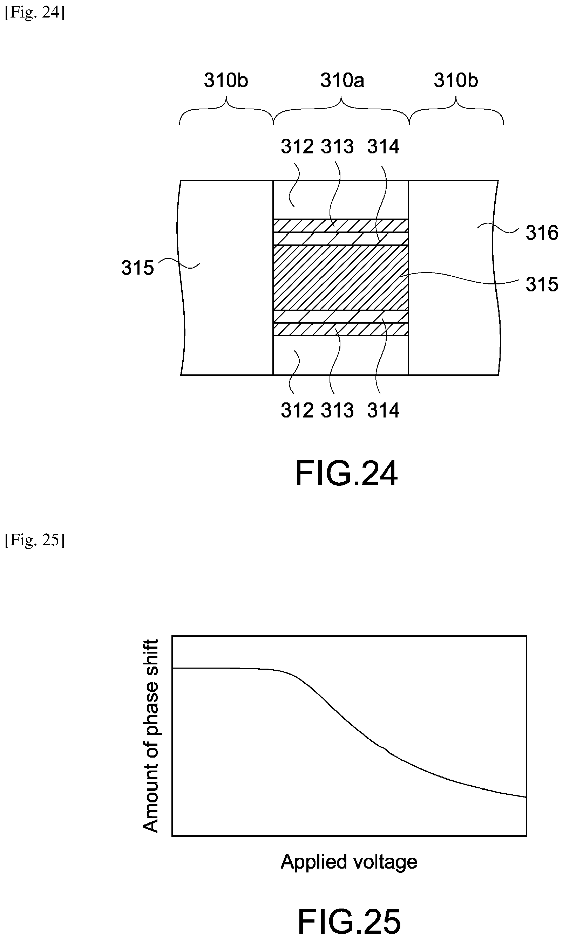

The phase plate 310 can include a liquid crystal element. Fig. 24 is a cross-sectional view showing the vicinity of the phase shift area 310a of the phase plate 310. As shown in Fig. 24, the phase shift area 310a can be configured by laminating a transparent substrate 312, a transparent conductive layer 313, an alignment layer 314, and a liquid crystal material layer 315.

The transparent substrate 312 is a plate-like member formed of a material having a high light transparency such as glass and synthetic resin. The transparent conductive layer 313 is a layer formed of a light transmissive conductive material such as an indium tin oxide (ITO), and is electrically connected to the outside of the phase plate 310 via a wiring or terminal (not shown). The alignment layer 314 is a layer whose surface has a fine regular structure formed thereon, and causes liquid crystal molecules to be oriented in a specific direction. In the liquid crystal material layer 315, a liquid crystal material is filled. The kind of the liquid crystal material is not particularly limited.

In the phase shift area 310a, by changing the potential difference between two transparent conductive layers 313 sandwiching the liquid crystal material layer 315, it is possible to change the alignment of liquid crystal molecules and to change the refractive index of the phase shift area 310a (i.e., amount of phase shift). Fig. 25 is a graph showing the relationship between the voltage applied to the transparent conductive layer 313 and the amount of phase shift. As shown in Fig. 25, it is possible to control the amount of phase shift with the voltage applied to the transparent conductive layer 313.

The light transmission area 310b includes a transparent substrate 316. The transparent substrate 316 can include a plate-like member formed of a material having a high light transparency such as glass and synthetic resin. It should be noted that the configuration of the phase plate 310 is not limited to the one described herein, and only needs to be capable of arbitrarily changing the shift amount of phase of the phase shift area 310a.

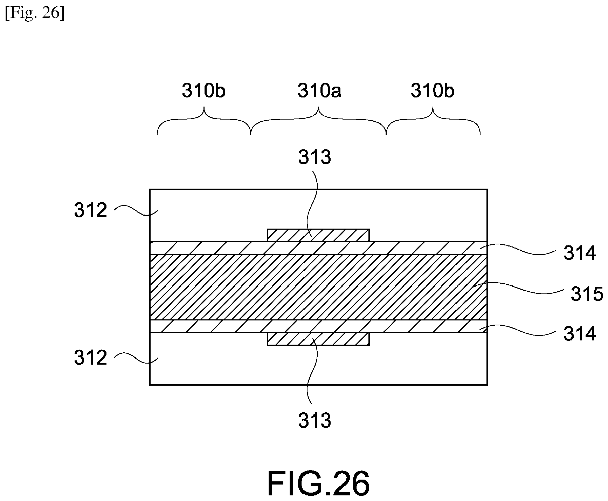

For example, in the phase plate 310, the transparent conductive layer 313 may be patterned according to the shape of the phase shift area 310a. Fig. 26 is a cross-sectional view showing the vicinity of the phase shift area 310a of the phase plate 310 in which the transparent conductive layer 313 is patterned. As shown in Fig. 26, the phase shift area 310a can be configured by laminating the transparent substrate 312, the transparent conductive layer 313, the alignment layer 314, and the liquid crystal material layer 315, and the light transmission area 310b can be configured by laminating the transparent substrate 312, the alignment layer 314, and the liquid crystal material layer 315.

Also in this configuration, by changing the potential difference between two transparent conductive layers 313 sandwiching the liquid crystal material layer 315, it is possible to change the alignment of liquid crystal molecules and to change the refractive index of the phase shift area 310a.

The phase plate 310 can be configured so that the image of the phase shift area 310a has a diameter larger than half of the NA of the objective lens 109 on the pupil surface H of the objective lens 109 as in the first and second embodiments. Moreover, the phase plate 310 does not necessarily need to be configured as described above, i.e., the image of the phase shift area 310a has a diameter smaller than half of the NA of the objective lens 109 on the pupil surface H.

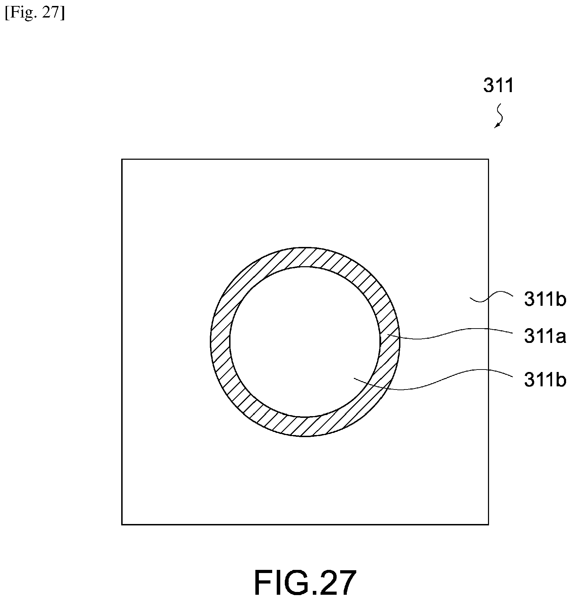

Fig. 27 is a plan view showing the light-reducing plate 311. As shown in Fig. 27, the light-reducing plate 311 has a light-reducing area 311a and a light transmission area 311b. The light-reducing area 311a is an area for reducing the intensity of incident light and is formed in a bracelet-like shape. The light transmission area 311b is an area for transmitting incident light therethrough without reducing the intensity of the incident light. The light-reducing plate 311 can include the light-reducing area 311a and the light transmission area 311b. The light-reducing area 311a is obtained by forming a light-reducing film on a light transmissive member in a bracelet-like shape, and the light transmission area 311b is the remaining area.

It should be noted that the phase shift area 310a of the phase plate 310 may have not only a function of phase shift but also a function of light reduction. In this case, there is no need to provide the light-reducing plate 311 to the phase-contrast microscope 300.

The condenser annulus 106 is configured so that the condenser annulus 106 is conjugated with the phase plate 310, i.e., the image of the light transmission area 106b (image F2) is included in the image of the phase shift area 210a (image F1) on the pupil surface H as in the first embodiment (see Fig. 7).

### (Regarding capturing of phase-contrast image by phase-contrast microscope)

The phase-contrast microscope 300 has the above-mentioned configuration. The illumination light applied from the light source 101 (L1 in Fig. 22) is collected by the light source lens 102, and the range in which the illumination light is applied is controlled by the field stop 103. Then, the illumination light is transmitted by the relay lens 104, and the amount of the illumination light is adjusted by the aperture stop 105. Then, the illumination light is transmitted through the light transmission area 106b of the condenser annulus 106, is formed in a ring shape (L2 in Fig. 22), and is applied to the observed object S by the condenser lens 107. It should be noted that the illumination light applied from the light source 101 needs to be illumination light that travels in a polarizing direction in parallel with the alignment direction of the liquid crystal molecules of the liquid crystal material layer 315 in the phase shift area 310a of the phase plate 310.

It should be noted that the illumination light is split into two light beams, i.e., direct light that is transmitted through the observed object S and goes straight and diffraction light that is diffracted by the observed object S. The direct light is transmitted through the phase shift area 310a of the phase plate 310, and the phase of the direct light is shifted. The direct light is transmitted through the light-reducing area 311a of the light-reducing plate 311, and the intensity of the direct light is reduced. It should be noted that in the phase plate 310, voltage is applied to the transparent conductive layer 313 in advance, and the phase shift area 310a has a predetermined refractive index by the alignment of the liquid crystal material layer 315. The diffraction light is transmitted through the light transmission area 310b of the phase plate 310 and the light transmission area 311b of the light-reducing plate 311. The direct light and the diffraction light interfere with each other, and are formed on the imaging surface of the imaging unit 112 by the imaging lens 111 (L3 in Fig. 22). Thus, a phase-contrast image is generated.

### (Effects of phase-contrast microscope)

The effects of the phase-contrast microscope 300 will be described. As described above, in the phase-contrast microscope 300, the phase of the direct light that has been transmitted through the observed object S is shifted by the phase shift area 310a including a liquid crystal element. It should be noted that the amount of phase shift in the phase plate of a phase-contrast microscope is typically 1/4 wavelength. This is because the phase shift due to diffraction of the +1-order diffraction light and the - 1-order diffraction light is 1/4 wavelength, and there is a need to match the phase of the direct light with the phase of the diffraction light to cause the direct light and the diffraction light to interfere with each other.

However, strictly speaking, the amount of phase to be applied to the direct light is different depending on the wavelength of the illumination light or the size of the observed object S, and the optical resolution of the phase-contrast image is not necessarily highest when the amount of phase shift by the phase plate is 1/4 wavelength.

It should be noted that the phase plate 310 of the phase-contrast microscope 300 according to this embodiment has the phase shift area 310a including a liquid crystal element, and it is possible to change the shift amount of the phase of the phase shift area 310a by applied voltage (see Fig. 25). Accordingly, it is possible to adjust the shift amount of the phase of the phase shift area 310a depending on the wavelength of the illumination light or the size of the observed object S, and to improve the optical resolution of a phase-contrast image.

### (Modified example)

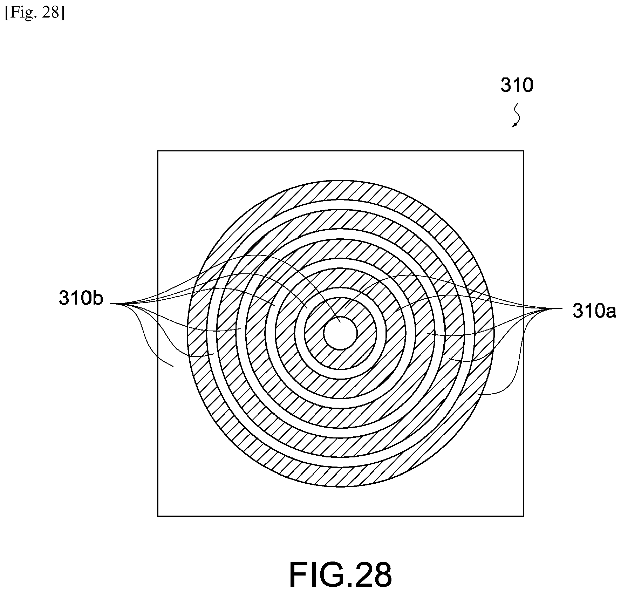

The phase plate 310 may have a plurality of phase shift areas arranged in a concentric circle shape. Fig. 28 is a plan view showing the phase plate 310 having a plurality of phase shift areas. As shown in Fig. 28, the phase plate 310 can have a plurality of phase shift areas 310a arranged in a concentric circle shape. Each of the phase shift areas 310a incudes a liquid crystal element as described above, and is configured so that the refractive index (amount of phase shift) of each phase shift area 310a can be changed.

The phase plate 310 can switch between the phase shift areas 310a depending on the NA of the objective lens to select the phase shift area 310a whose amount of phase shift is changed, and a plurality of objective lenses having different NAs can be treated only with the phase plate 310. Moreover, because each phase shift area 310a includes a liquid crystal element, it is possible to adjust the shift amount of the phase of each phase shift area 310a depending on the wavelength of the illumination light or the size of the observed object S as described above, and to improve the optical resolution of a phase-contrast image.

### (Regarding phase-contrast microscopic system)

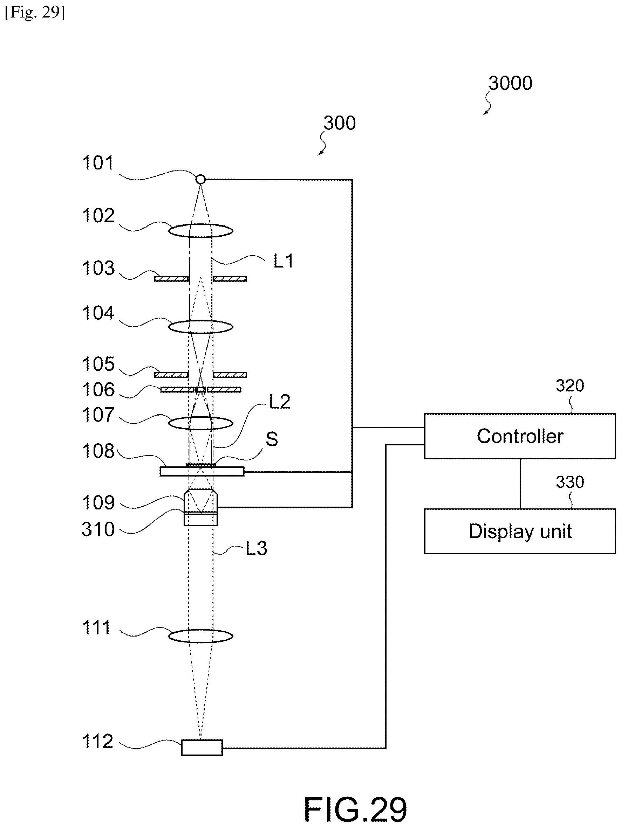

The phase-contrast microscope 300 may constitute a microscopic system. Fig. 29 is a schematic diagram showing the configuration of a phase-contrast microscopic system 3000 including the phase-contrast microscope 300.

As shown in Fig. 29, the phase-contrast microscopic system 3000 includes the phase-contrast microscope 300, a controller 320, and a display unit 330.

The phase-contrast microscope 300 has the above-mentioned configuration. As described above, the phase-contrast microscope 300 includes the imaging unit 112 that captures a phase-contrast image of an observed object.

The controller 320 controls the phase-contrast microscope 300 and the imaging unit 112, and causes the imaging unit 112 to capture a phase-contrast image. Specifically, the controller 320 can be connected to the light source 101, the stage 108, and the objective lens 109, and can control these components.

For example, the controller 320 can adjust the contrast of a phase-contrast image captured by the imaging unit 112 to maximize the contrast, when the observed object S is placed on the stage 108. In addition, the controller 320 can control each configuration of the phase-contrast microscope 300, and can cause the imaging unit 112 to capture a phase-contrast image. The controller 320 supplies the phase-contrast image captured by the imaging unit 112 to the display unit 330.

The display unit 330 displays the phase-contrast image supplied from the controller 320. The display unit 330 can be a display apparatus such as a liquid crystal display (LCD).

The phase-contrast microscopic system 3000 has the above-mentioned configuration. Because the phase-contrast microscopic system 3000 includes the phase-contrast microscope 300, it is possible to make best use of the NA of the objective lens as described above, and to achieve a high optical resolution.

### (Example)

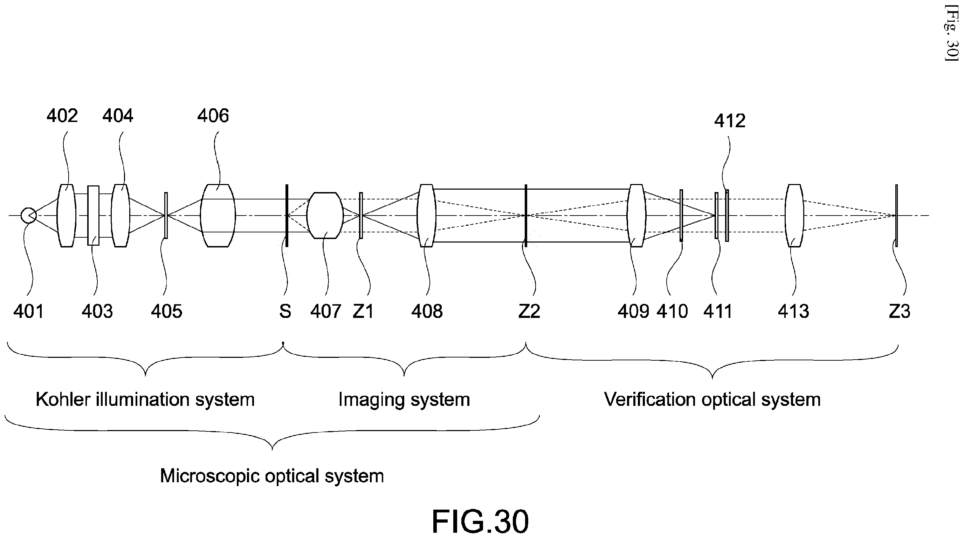

An example of the present disclosure will be described. Fig. 30 is a schematic diagram showing a verification experiment system 400 according to the example. As shown in Fig. 30, the verification experiment system 400 includes a microscopic optical system and a verification optical system. The microscopic optical system is formed of a Kohler illumination system including a light source 401, a lens 402, a green interference filter (GIF) 403, a lens 404, a condenser annulus 405, and a lens 406, and an imaging system including an objective lens 407 and a lens 408. The condenser annulus 405 has a bracelet-like light transmission area for transmitting incident light therethrough, and a light-shielding area for blocking incident light (See Fig. 2). In this example, the condenser annulus 405 in which light-shielding area having various diameters were formed was prepared. The observed object S is disposed between the lens 406 and the objective lens 407. The magnification and NA of the objective lens 407 are 20 x and 0.45, respectively.

The verification optical system includes a lens 409, a polarizer 410, a light-reducing plate 411, a phase plate 412, and a lens 413. The polarizer 410 is an element that polarizes incident light.

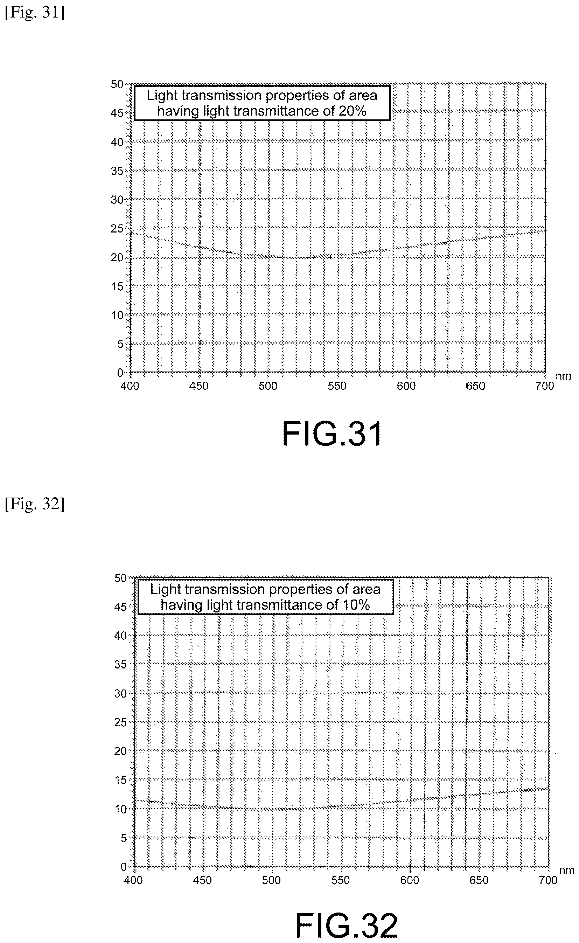

The light-reducing plate 411 has a bracelet-like light-reducing area that reduces the intensity of incident light, and a light transmission area that transmits incident light therethrough (see Fig. 14). In this example, the light-reducing plate 411 was obtained by depositing chromium on a transparent plate including glass or synthesized quartz. The area in which chromium is formed is the light-reducing area, and the remaining area is the light transmission area. Light-reducing areas having a light transmittance of 20% and 10% were prepared. Fig. 31 is a graph showing the light transmission properties of the light-reducing area having a light transmittance of 20%, and Fig. 32 is a graph showing the light transmission properties of the light-reducing area having a light transmittance of 10%. In this example, the light-reducing plate 411 in which light-reducing areas having various diameters were formed were prepared.

The phase plate 412 includes a liquid crystal element, and has a bracelet-like phase shift area that shifts the phase of incident light and a light transmission area that transmits incident light therethrough (see Fig. 23). In this example, the phase plate 412 in which phase shift areas having various diameters were formed was prepared.

A position Z1 is a position of the opening ring image, and a position Z2 is a position at which an image sensor (camera) is located in normal capturing of a phase-contrast image. A position Z3 is a position at which an image sensor is located in this example.

As described above, a plurality of condenser annuluss 405, phase plates 412, and light-reducing plates 411 having different diameters were prepared.

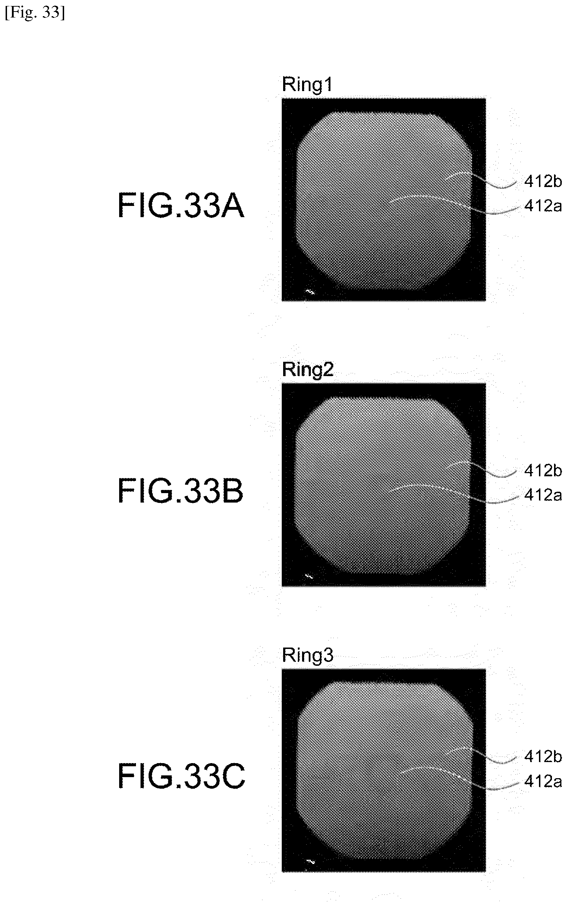

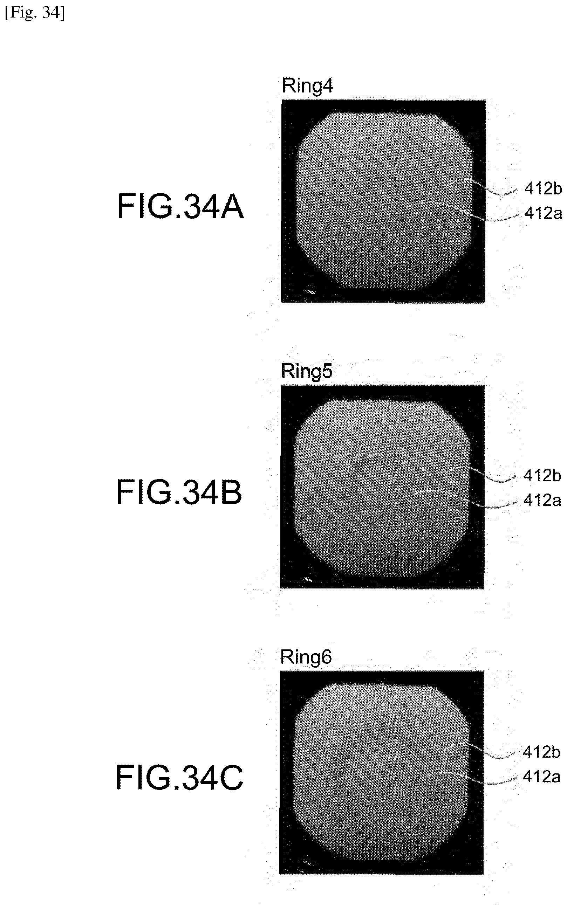

Figs. 33 and Figs. 34 are each a photograph of the phase plate 412 used in this example. As shown in Figs. 33 and Figs. 34, the phase plate 412 has a phase shift area 412a and a light transmission area 412b. As shown in Figs. 33 and Figs. 34, the phase shift area 412a has various diameters.

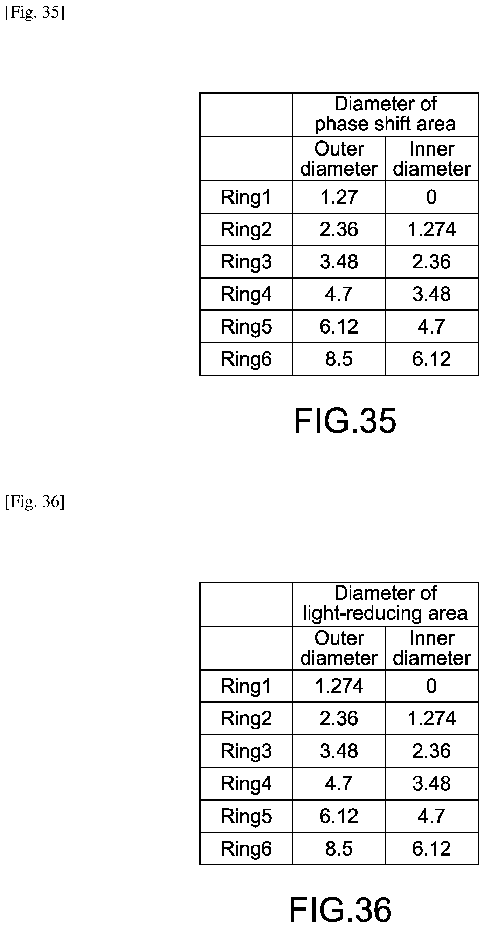

Fig. 35 is a table showing the diameters of the phase shift area 412a. Hereinafter, symbols of Ring1 to Ring6 are given to each phase plate 412 in order of diameter of the phase shift area 412a from smallest. Moreover, in the following description, also the light-reducing plates 411 and the condenser annuluss 405 used together with the phase plates 412 represented by Ring1 to Ring 6 are referred to as Ring 1 to Ring6, respectively.

Fig. 36 is a table showing the diameters of the light-reducing area of the light-reducing plate 411. As shown in Fig. 36, the diameters of the light-reducing area are the same as the diameters of the phase shift area 412a of the phase plate 412 used together therewith.

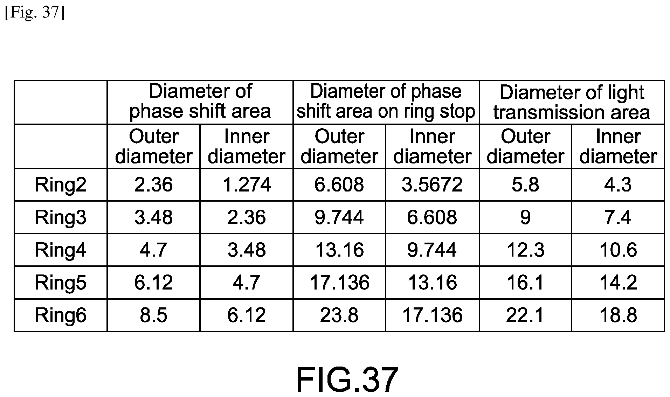

Fig. 37 is a table showing the diameters of the phase shift area of the phase plate 412 and the light transmission area of the condenser annulus 405. As shown in Fig. 37, the light transmission area has diameters that can be contained in the phase shift area projected to the condenser annulus 405. Specifically, light that has been transmitted through the condenser annulus 405 enters the phase shift area of the phase plate 412.

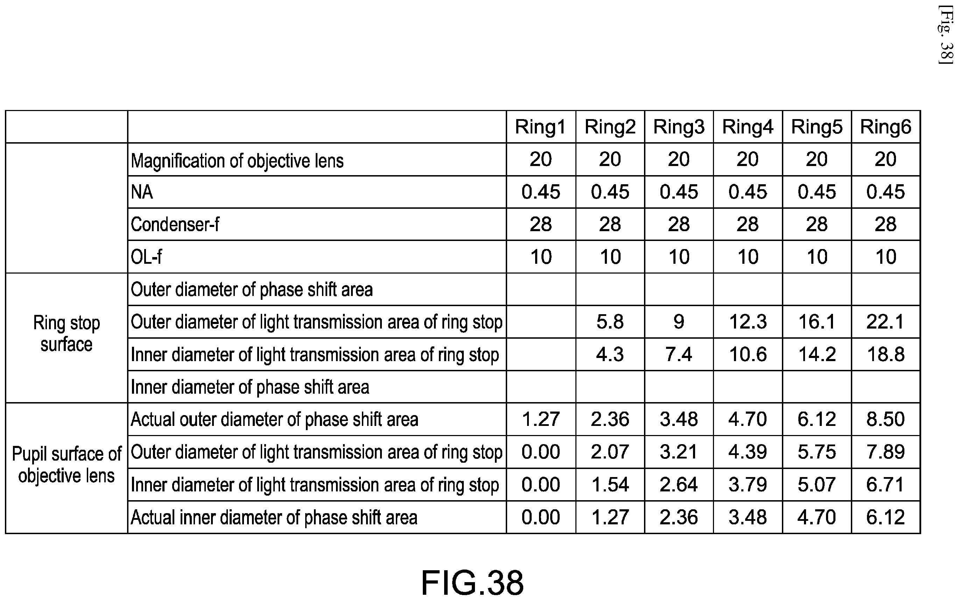

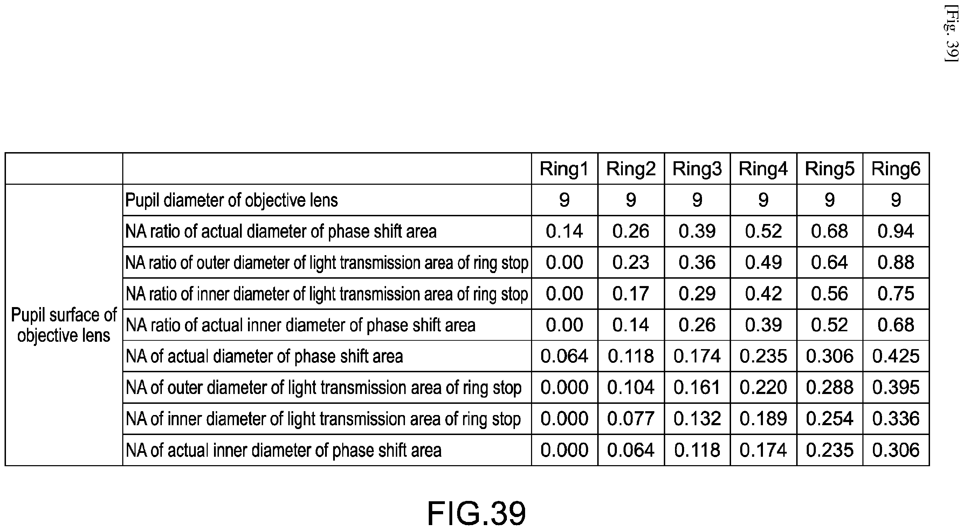

Fig. 38 and Fig. 39 are each a table showing the relationship between the NA of the objective lens and the diameters of areas of the condenser annulus 405, the phase plate 412, and the light-reducing plate 411. It should be noted that "condenser-f" represents the focal length of the condenser lens, and "OL-f" represents the focal length of the objective lens. The "outer diameter" and "inner diameter" of each area represent diameters on the surface described in the left column, and the "actual outer diameter" and "actual inner diameter" represent actual diameters.

Out of the Ring1 to Ring 6, the Ring5 and the Ring6 are configured so that the NA ratio of the diameters (actual inner diameter and actual outer diameter) of the phase shift area on the pupil surface of the objective lens is larger than 0.5, i.e., the diameters of the phase shift area have a diameter larger than half of the NA of the objective lens. It should be noted that the diameters of areas in a general phase-contrast microscope are in the range between the diameter corresponding to the Ring2 and the diameter corresponding to the Ring3.

The verification experiment system 400 having the above-mentioned configuration was used to capture a phase-contrast image.

The condenser annulus 405, the phase plate 412, and the light-reducing plate 411 corresponding to the Ring2 were set in the verification experiment system 400. The light-reducing plate 411 having the light-reducing area whose light transmittance is 10% was used. A phase-different image was captured while changing the voltage applied to the phase plate 412 including a liquid crystal element. As described above, the shift amount of the phase of the phase plate 412 including a liquid crystal element varies by the voltage applied to the liquid crystal element (see Fig. 25).

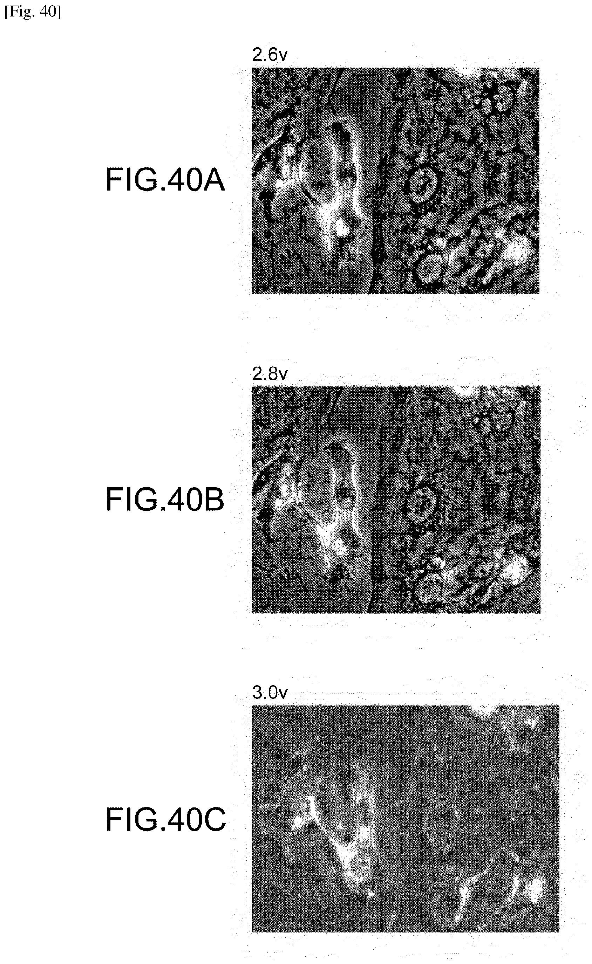

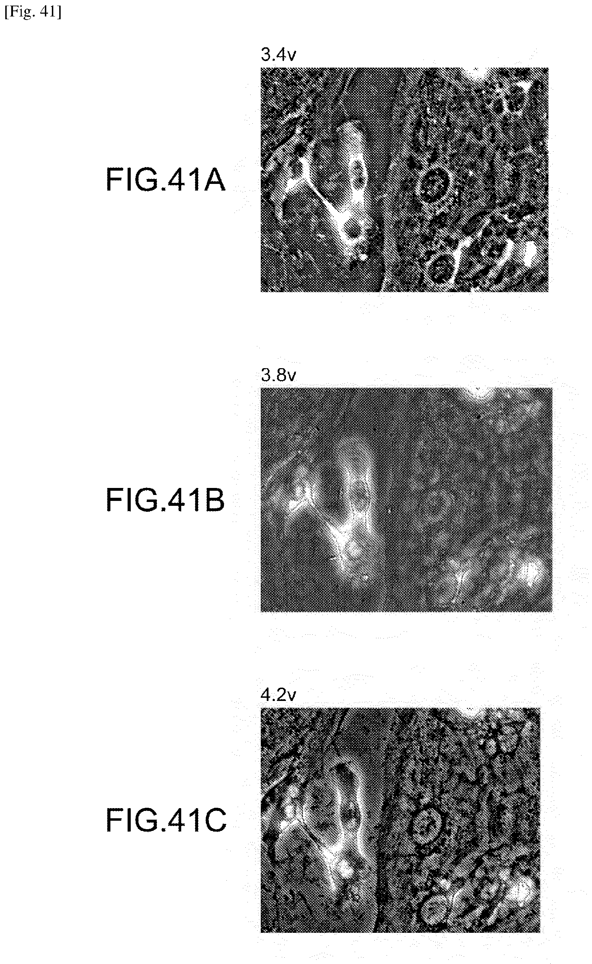

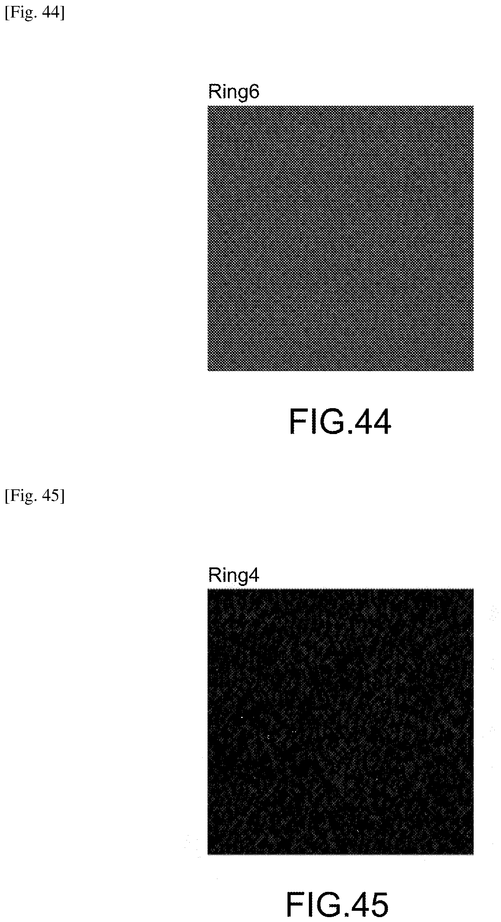

Figs. 40 and Figs. 41 are each a phase-contrast image captured with each applied voltage. The voltages applied to the phase plate 412 are 2.6 V, 2.8 V, 3.0 V, 3.4 V, 3.8 V, and 4.2 V in Fig. 40A, 40B, 40C, 41A, 41B, and 41C, respectively. As shown in Figs. 40 and Figs. 41, the contrast of the phase-contrast image is different depending on the applied voltage (amount of phase shift). The phase-contrast images shown in Fig. 40A and Fig. 41C show positive contrast, and the phase-contrast image shown in Fig. 44A shows negative contrast. As described above, it can be seen that a phase plate including a liquid crystal element, i.e., one phase plate, can be used to adjust the contrast of the phase-contrast image.

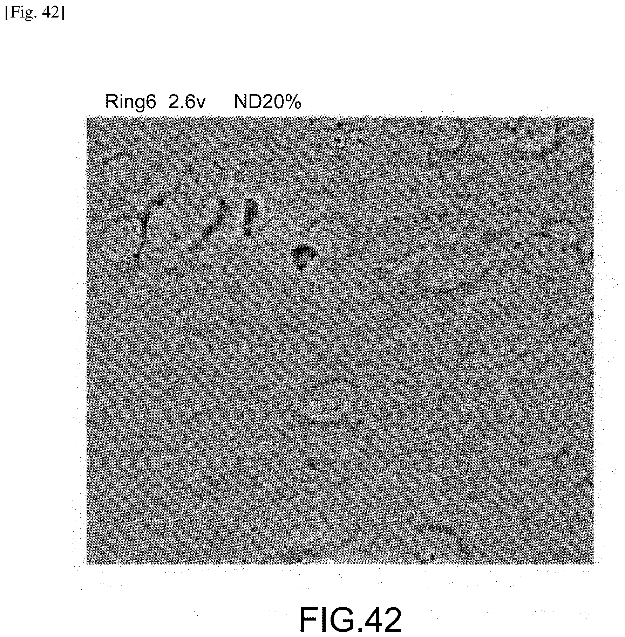

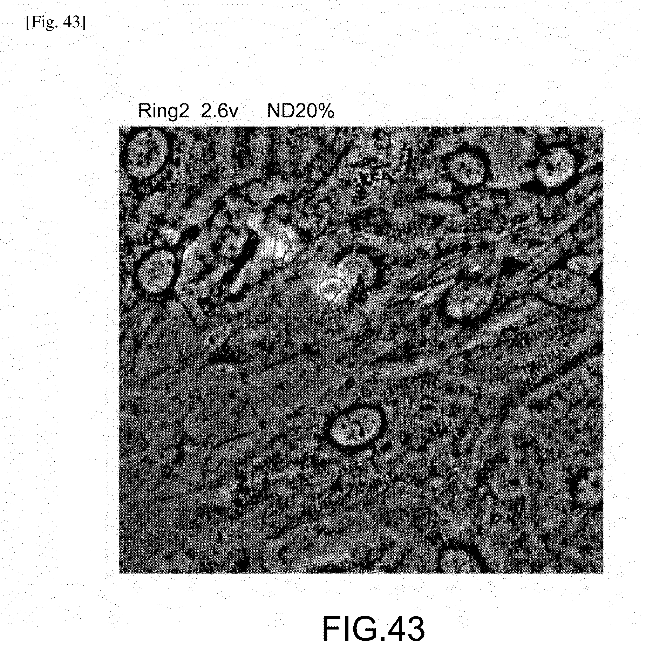

Moreover, the condenser annulus 405, the phase plate 412, and the light-reducing plate 411 corresponding to the Ring2 and the Ring6 were set in the verification experiment system 400, and a phase-contrast image was captured. An observed object was an intracellular vesicle. It should be noted that the voltage applied to the phase plate 412 was 2.6 V, and the light transmittance of the light-reducing plate was 20%. Fig. 42 is a phase-contrast image captured using the Ring6, and Fig. 43 is a phase-contrast image captured using the Ring2.

When Fig. 42 is compared with Fig. 43, it can be seen that a fine thing is resolved although the contrast is small in Fig. 42. Specifically, it is possible to achieve a high optical resolution because a high NA component of the objective lens can be taken into the phase-contrast image if the phase shift area 412a of the phase plate 412 has a large diameter.

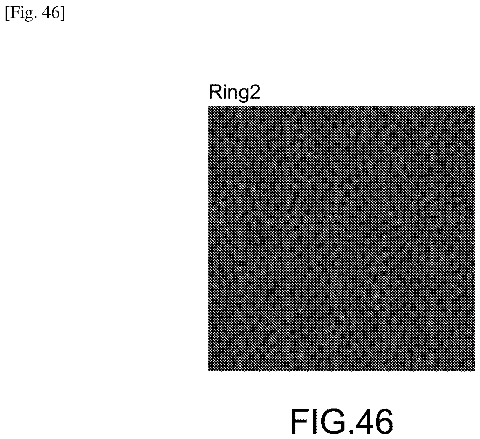

Moreover, the condenser annulus 405, the phase plate 412, and the light-reducing plate 411 corresponding to the Ring2, the Ring4, and the Ring6 are set in the verification experiment system 400, and a phase-contrast image is captured. The observed object was a surface of a digital versatile disc (DVD)-ROM without a reflection surface. It should be noted that the voltage applied to the phase plate 412 was 2.6 V, and the light transmittance of the light-reducing plate was 10%. Fig. 44 is a phase-contrast image captured using the Ring6, Fig. 45 is a phase-contrast image captured using the Ring4, and Fig. 46 is a phase-contrast image captured using the Ring2.

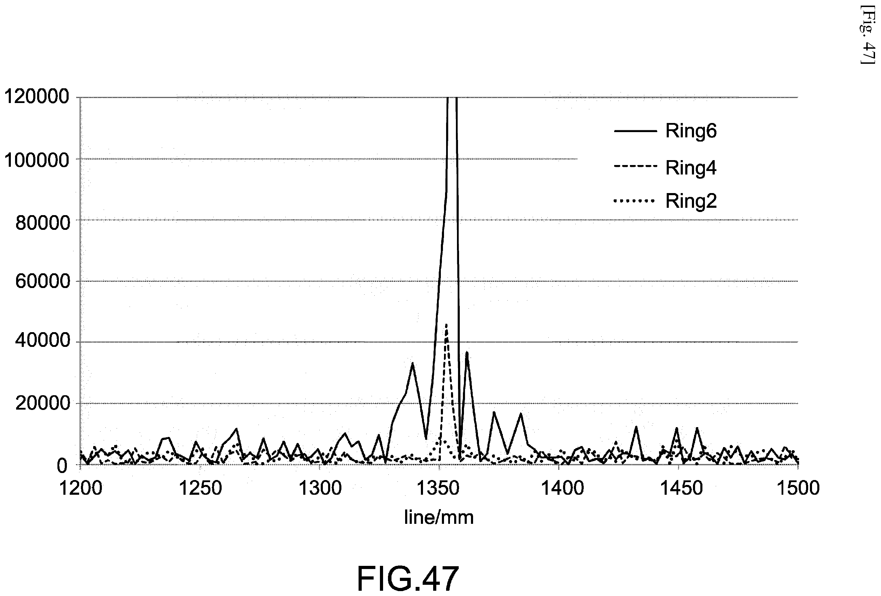

Moreover, Fig. 47 shows the results obtained by performing frequency analysis on the phase-contrast images shown in Fig. 44 to Fig. 46. From these results, it can be seen that the phase-contrast image captured using the Ring6 (Fig. 44) includes many frequency components of 1350 line/mm (track pitch of DVD), i.e., it is possible to detect the pit of DVD only in the case of the Ring6. Accordingly, it is possible to achieve a high optical resolution because a high NA component of the objective lens can be taken into the phase-contrast image if the diameter of the phase shift area 412a of the phase plate 412 is large.

It should be understood by those skilled in the art that various modifications, combinations, sub-combinations and alterations may occur depending on design requirements and other factors insofar as they are within the scope of the appended claims.

### Reference Signs List

100, 200, 300 Phase-contrast microscope
101 Light source
102 Light source lens
104 Relay lens
106 Condenser annulus
107 Condense lens
108 Stage
109 Objective lens
110, 210, 310 Phase plate
111 Image forming lens
112 Imaging unit
120, 220, 320 Controller
130, 230, 330 Display unit
1000, 2000, 3000 Phase-contrast microscopic system

## Claims

1. A phase-contrast microscope (100) comprising:
a light source (101) arranged to illuminate a sample region at a stage (108);
an objective lens (109) having a numerical aperture (NA) and arranged to collect radiation from the sample region, the radiation comprising diffracted light that is diffracted by a sample;
a condenser annulus (106) having an annular light-transmission region (106b), wherein the condenser annulus is located between the light source and sample region; and
a phase plate (110, 210, 310) having a first annular phase-shift region (110a, 210a, 310a), a light transmission area (210b), and a light-blocking region (210c) located in a peripheral region outside the annular phase-shift region, wherein the annular phase-shift region receives radiation from the sample region at an angle from the sample region corresponding to greater than one-half of the NA of the objective lens,
wherein the annular phase-shift region reduces an intensity of light passing through the annular phase-shift region,
wherein the light transmission area is configured to transmit the -1-order diffraction light without modifying its phase or intensity, and
wherein the light-blocking region is configured to block the +1 order diffraction light.

2. The microscope of claim 1, wherein a diameter of the annular phase-shift region has a value that corresponds to greater than one-half of the NA of the objective lens.

3. The microscope of claim 1, wherein the phase plate further includes at least a second annular phase-shift region (310a) separated from the first annular phase-shift region and concentric with the first annular phase-shift region.

4. The microscope of claim 1, further comprising:
an imaging lens (111);
an imaging unit (112) arranged to capture an image formed by the objective lens and the imaging lens; and
a controller (120) configured to control the imaging unit to capture an image of a sample and to control a position of the stage.

5. The microscope of claim 4, wherein the controller is further configured to adjust a contrast of a phase-contrast image and to control an intensity of the light source.

6. The microscope of claim 4, wherein the amount of phase shift of the annular phase-shift region is electrically adjustable.

7. The microscope of claim 6, wherein the annular phase-shift region comprises a liquid crystal.

8. The microscope of claim 6, wherein the controller is configured to receive an image of a sample and adjust an amount of phase shift of the annular phase-shift region to improve an image of the sample.

9. The microscope of claim 4, further comprising an image display device (130),
wherein the controller is configured to send an image captured by the imaging device to the display device.

10. A method for forming a phase-contrast image, the method comprising:
illuminating a sample region with a light source and a condenser annulus that is located between the light source and sample region, wherein the condenser annulus has an annular light-transmission region;
collecting radiation from the sample region with an objective lens having a numerical aperture (NA), the radiation comprising diffracted light that is diffracted by a sample; and
phase shifting at least a portion of the collected radiation from the sample with a phase plate, wherein the phase plate has an annular phase-shift region that receives radiation from the sample region at an angle from the sample region corresponding to greater than one-half of the NA of the objective lens, a light transmission area (210b), and a light-blocking region (210c) located in a peripheral region outside the annular phase-shift region,
reducing an intensity of light passing through the annular phase-shift region,
transmitting, via the light transmission area, the -1-order diffraction light without modifying its phase or intensity, and
blocking, with the light-blocking region, the +1 order diffraction light.

## Patentansprüche

1. Phasenkontrastmikroskop (100), das Folgendes umfasst:
eine Lichtquelle (101), die angeordnet ist, eine Probenregion auf einem Objekttisch (108) zu beleuchten;
eine Objektivlinse (109), die eine numerische Apertur (NA) aufweist und angeordnet ist, Strahlung aus der Probenregion zu sammeln, wobei die Strahlung gebeugtes Licht umfasst, das von einer Probe gebeugt wird;
einen Kondensorring (106) mit einer ringförmigen Lichtübertragungsregion (106b), wobei sich der Kondensorring zwischen der Lichtquelle und der Probenregion befindet; und
eine Phasenplatte (110, 210, 310) mit einer ersten ringförmigen Phasenverschiebungsregion (110a, 210a, 310a), einem Lichtübertragungsbereich (210b) und einer Lichtblockierungsregion (210c), die sich in einer peripheren Region außerhalb der ringförmigen Phasenverschiebungsregion befindet, wobei die ringförmige Phasenverschiebungsregion Strahlung aus der Probenregion in einem Winkel zur Probenregion empfängt, der mehr als einer Hälfte der NA der Objektivlinse entspricht,
wobei die ringförmige Phasenverschiebungsregion eine Intensität von Licht, das durch die ringförmige Phasenverschiebungsregion geht, reduziert,
wobei der Lichtübertragungsbereich dazu ausgelegt ist, das Beugungslicht der Ordnung -1 zu übertragen, ohne seine Phase oder Intensität zu modifizieren, und
wobei die Lichtblockierungsregion dazu ausgelegt ist, das Beugungslicht der Ordnung +1 zu blockieren.

2. Mikroskop nach Anspruch 1, wobei ein Durchmesser der ringförmigen Phasenverschiebungsregion einen Wert hat, der mehr als der Hälfte der NA der Objektivlinse entspricht.

3. Mikroskop nach Anspruch 1, wobei die Phasenplatte ferner mindestens eine zweite ringförmige Phasenverschiebungsregion (310a) beinhaltet, die von der ersten ringförmigen Phasenverschiebungsregion getrennt und mit der ersten ringförmigen Phasenverschiebungsregion konzentrisch ist.

4. Mikroskop nach Anspruch 1, das ferner Folgendes umfasst:
eine Bildgebungslinse (111);
eine Bildgebungseinheit (112), die angeordnet ist, ein Bild, das von der Objektivlinse und der Bildgebungslinse gebildet wird, zu erfassen; und
eine Steuerung (120), die dazu ausgelegt ist, die Bildgebungseinheit zum Erfassen eines Bildes einer Probe zu steuern sowie eine Position des Objekttisches zu steuern.

5. Mikroskop nach Anspruch 4, wobei die Steuerung ferner dazu ausgelegt ist, einen Kontrast eines Phasenkontrastbildes anzupassen und eine Intensität der Lichtquelle zu steuern.

6. Mikroskop nach Anspruch 4, wobei der Betrag der Phasenverschiebung der ringförmigen Phasenverschiebungsregion elektrisch anpassbar ist.

7. Mikroskop nach Anspruch 6, wobei die ringförmige Phasenverschiebungsregion einen Flüssigkristall umfasst.

8. Mikroskop nach Anspruch 6, wobei die Steuerung dazu ausgelegt ist, ein Bild von einer Probe zu empfangen und einen Betrag der Phasenverschiebung der ringförmigen Phasenverschiebungsregion anzupassen, um ein Bild der Probe zu verbessern.

9. Mikroskop nach Anspruch 4, das ferner eine Bildanzeigevorrichtung (130) umfasst, wobei die Steuerung dazu ausgelegt ist, ein Bild, das von der Bildgebungsvorrichtung erfasst wird, an die Anzeigevorrichtung zu senden.

10. Verfahren zum Bilden eines Phasenkontrastbildes, wobei das Verfahren Folgendes umfasst:
Beleuchten einer Probenregion mit einer Lichtquelle und einem Kondensorring, der sich zwischen der Lichtquelle und der Probenregion befindet, wobei der Kondensorring eine ringförmige Lichtübertragungsregion aufweist;
Sammeln von Strahlung aus der Probenregion mit einer Objektivlinse, die eine numerische Apertur (NA) aufweist, wobei die Strahlung gebeugtes Licht umfasst, das von einer Probe gebeugt wird; und
Phasenverschieben von mindestens einem Abschnitt der gesammelten Strahlung von der Probe mit einer Phasenplatte, wobei die Phasenplatte eine ringförmige Phasenverschiebungsregion, die Strahlung aus der Probenregion in einem Winkel zur Probenregion empfängt, der mehr als einer Hälfte der NA der Objektivlinse entspricht, einen Lichtübertragungsbereich (210b) und eine Lichtblockierungsregion (210c), die sich in einer peripheren Region außerhalb der ringförmigen Phasenverschiebungsregion befindet, aufweist,
Reduzieren einer Intensität von Licht, das durch die ringförmige Phasenverschiebungsregion geht,
Übertragen des Beugungslichts der Ordnung -1 via den Übertragungsbereich, ohne seine Phase oder Intensität zu modifizieren, und
Blockieren des Beugungslichts der Ordnung +1 mit der Lichtblockierungsregion.

## Revendications

1. Microscope à contraste de phase (100) comprenant :
une source de lumière (101) agencée pour éclairer une région d'échantillon au niveau d'une platine (108) ;
une lentille d'objectif (109) ayant une ouverture numérique (NA) et agencée pour collecter un rayonnement de la région d'échantillon, le rayonnement comprenant une lumière diffractée qui est diffractée par un échantillon;
un anneau condenseur (106) ayant une région de transmission de lumière annulaire (106b), dans lequel l'anneau condenseur est situé entre la source de lumière et la région d'échantillon; et
une lame de phase (110, 210, 310) ayant une première région de déphasage annulaire (110a, 210a, 310a), une zone de transmission de lumière (210b) et une région de blocage de lumière (210c) située dans une région périphérique à l'extérieur de la région de déphasage annulaire, dans lequel la région de déphasage annulaire reçoit un rayonnement de la région d'échantillon à un angle par rapport à la région d'échantillon correspondant à plus de la moitié de la NA de la lentille d'objectif,
dans lequel la région de déphasage annulaire réduit une intensité de la lumière traversant la région de déphasage annulaire,
dans lequel la zone de transmission de lumière est configurée pour transmettre la lumière de diffraction d'ordre -1 sans modifier sa phase ou son intensité, et
dans lequel la région de blocage de lumière est configurée pour bloquer la lumière de diffraction d'ordre +1.

2. Microscope selon la revendication 1, dans lequel un diamètre de la région de déphasage annulaire a une valeur qui correspond à plus de la moitié de la NA de la lentille d'objectif.

3. Microscope selon la revendication 1, dans lequel la lame de phase comprend en outre au moins une seconde région de déphasage annulaire (310a) séparée de la première région de déphasage annulaire et concentrique avec la première région de déphasage annulaire.

4. Microscope selon la revendication 1, comprenant en outre :
une lentille d'imagerie (111) ;
une unité d'imagerie (112) agencée pour capturer une image formée par la lentille d'objectif et la lentille d'imagerie; et
un contrôleur (120) configuré pour commander l'unité d'imagerie pour capturer une image d'un échantillon et pour commander une position de la platine.

5. Microscope selon la revendication 4, dans lequel le contrôleur est en outre configuré pour régler un contraste d'une image à contraste de phase et pour commander une intensité de la source de lumière.

6. Microscope selon la revendication 4, dans lequel la quantité de déphasage de la région de déphasage annulaire est réglable électriquement.

7. Microscope selon la revendication 6, dans lequel la région de déphasage annulaire comprend un cristal liquide.

8. Microscope selon la revendication 6, dans lequel le contrôleur est configuré pour recevoir une image d'un échantillon et régler une quantité de déphasage de la région de déphasage annulaire pour améliorer une image de l'échantillon.

9. Microscope selon la revendication 4, comprenant en outre un dispositif d'affichage d'image (130), dans lequel le contrôleur est configuré pour envoyer une image capturée par le dispositif d'imagerie au dispositif d'affichage.

10. Procédé pour former une image à contraste de phase, le procédé comprenant :
éclairer une région d'échantillon avec une source de lumière et un anneau condenseur qui est situé entre la source de lumière et la région d'échantillon, dans lequel l'anneau condenseur a une région de transmission de lumière annulaire;
collecter un rayonnement de la région d'échantillon avec une lentille d'objectif ayant une ouverture numérique (NA), le rayonnement comprenant une lumière diffractée qui est diffractée par un échantillon; et
déphaser au moins une partie du rayonnement collecté de l'échantillon avec une lame de phase, dans lequel la lame de phase a une région de déphasage annulaire qui reçoit le rayonnement de la région d'échantillon à un angle par rapport à la région d'échantillon correspondant à plus de la moitié de la NA de la lentille d'objectif, une région de transmission de lumière (210b) et une région de blocage de lumière (210c) située dans une région périphérique à l'extérieur de la région de déphasage annulaire,
réduire une intensité de la lumière traversant la région de déphasage annulaire,
transmettre, via la zone de transmission de lumière, la lumière de diffraction d'ordre -1 sans modifier sa phase ou son intensité, et
bloquer, avec la région de blocage de lumière, la lumière de diffraction d'ordre +1.
